# EUROPÄISCHE PATENTSCHRIFT

(11) **EP 3 405 376 B1**
(45) Veröffentlichungstag und Bekanntmachung des Hinweises auf die Patenterteilung: **27.05.2020**
(21) Anmeldenummer: 17701440.4
(22) Anmeldetag: 17.01.2017
(51) Int. Cl.: B60W 50/08, B60W 50/16, B60W 50/14, B60Q 9/00, B60W 30/09

(54) **VERFAHREN UND VORRICHTUNG ZUM ZUMINDEST TEILWEISE AUTOMATISIERTEN FAHREN**
METHOD AND DEVICE FOR AT LEAST PARTIALLY AUTOMATED DRIVING
PROCÉDÉ ET DISPOSITIF POUR UNE CONDUITE AU MOINS AUTOMATISÉE

(30) Priorität: 22.01.2016 DE 102016200897
(43) Veröffentlichungstag der Anmeldung: 28.11.2018
(73) Patentinhaber: Bayerische Motoren Werke Aktiengesellschaft, 80809 München (DE)
(72) Erfinder: AUGST, Alexander, 80937 Muenchen (DE)
(86) Internationale Anmeldenummer: PCT/EP2017/050897
(87) Internationale Veröffentlichungsnummer: WO 2017/125390

(56) Entgegenhaltungen:
- DE-A1-102006 057 842
- DE-A1-102010 011 294
- DE-A1-102010 035 718
- DE-A1-102010 048 822
- DE-A1-102011 121 948
- DE-A1-102013 020 933

## Beschreibung

Die Erfindung betrifft ein Verfahren und eine entsprechende Vorrichtung zur Unterstützung eines Fahrers beim Fahren eines Fahrzeugs mit einer zumindest teilautomatisierten Fahrfunktion.

Fahrzeuge weisen vermehrt Fahrfunktionen auf, mit denen bestimmte Teile der Aufgaben eines Fahrers, auch einzelne Fahrmanöver (wie z.B. ein Einparkmanöver) zumindest teilautomatisiert durch das Fahrzeug durchgeführt werden. Der Automatisierungsgrad der Fahrfunktionen kann dabei unterschiedlich sein. Im Allgemeinen ist dabei derzeit eine Überwachung des Fahrzeugumfelds bzw. der damit zusammenhängenden Verkehrssituation oder zumindest der Anzeigen es Fahrzeugs durch den Fahrer des Fahrzeugs erforderlich.

DE 10 2013 020933 A1 beschreibt ein Verfahren zur Ausgabe eines Hinweises in Bezug auf einen bevorstehenden Eingriff. DE 10 2010 035 718 A1 beschreibt ein Verfahren zur Ausgabe einer Warnung an einen Fahrer eines Fahrzeugs. DE 10 2011 121948 A1 beschreibt ein Verfahren zur Anzeige von Information in Bezug auf ein Fahrmanöver auf einem Bildschirm. DE 10 2010 048822 A1 beschreibt ein Verfahren zur Erhöhung der Aufmerksamkeit eines Fahrers. DE 10 210 011294 A1 beschreibt ein Verfahren zum Informieren eines Fahrers über einen verfügbaren Ausrollweg. DE 10 2006 057842 A1 beschreibt ein Verfahren zum Abbruch eines Querführungseingriffs.

Im Betrieb einer teilautomatisierten Fahrfunktion können durch das Fahrzeug z.B. auf Basis von aktuellen Umfelddaten, Handlungsempfehlungen für einen Fahrer des Fahrzeugs generiert werden, die dann von dem Fahrer umgesetzt werden können. Alternativ oder ergänzend können durch eine Fahrfunktion in automatischer oder teilautomatischer Weise Fahrmanöver geplant und durchgeführt werden. Zu einem sicheren und komfortablen teilautomatisierten Fahren gehört außerdem die Aufgabe ein hinreichendes Vertrauen bei dem Fahrer des Fahrzeugs in die (teil-) automatisierte Fahrfunktion zu schaffen.

In mehreren denkbaren Anwendungsfällen sind automatische oder teilautomatische Fahrmanöver für einen Fahrer des Fahrzeugs nicht oder nicht hinreichend nachvollziehbar. Auch kann der Fahrer von bestimmten Manövervorhaben der Fahrzeugfunktion überrascht sein, oder diese aus seiner eigenen fahrerischen Sicht, z.B. aus Rücksicht auf weitere Verkehrsteilnehmer, nicht wünschen.

Ferner können mehrere denkbare, alternative von einer teilautomatischen Fahrfunktion durchführbare Fahrmanöver aufgrund ihrer (zumindest anfangs) ähnlichen Wirkung (wie z.B. ein Spurwechsel und ein Abbiegen) erst nach einer gewissen Zeit nach Beginn des Fahrmanövers durch den Fahrer voneinander unterscheidbar sein. Dabei sind Situationen denkbar, in welchen der Fahrer bestimmte Vorhaben der Fahrzeugfunktion erst verstehen kann, wenn ein Fahrmanöver relativ weit fortgeschritten oder nicht mehr umkehrbar ist.

Ferner stellt sich auch die Frage nach einer (vom Fahrer gewünschten) Mitwirkung bei bestimmten Entscheidungen einer automatisierten Fahrt, ohne die automatisierte Fahrt dabei abzuschalten oder ein Abschalten der entsprechenden Fahrfunktion herbeizuführen.

Aufgrund der Tatsache, dass Manöverempfehlungen und/oder Manöverentscheidungen typischerweise kurzfristig erfolgen, ist es wichtig, dass diesbezügliche Information schnell und zuverlässig an den Fahrer eines Fahrzeug mit einer (teil-) automatisierten Fahrfunktion übermittelt wird. Das vorliegende Dokument befasst sich mit der technischen Aufgabe, ein Verfahren und eine entsprechende Vorrichtung für ein schnelles und zuverlässiges Zusammenwirken zwischen einer (teil-) automatisierten Fahrfunktion eines Fahrzeugs und einem Fahrer des Fahrzeugs bereitzustellen.

Die Aufgabe wird durch die unabhängigen Ansprüche gelöst. Vorteilhafte Ausführungsformen werden u.a. in den abhängigen Ansprüchen beschrieben.

Gemäß einem Aspekt wird ein Verfahren zur Umsetzung eines zumindest teilautomatisierten Fahrmanövers in einem Fahrzeug beschrieben. Das Verfahren kann durch eine Vorrichtung des Fahrzeugs umfassend eine Steuereinheit ausgeführt werden. Das Verfahren umfasst das Ermitteln, auf Basis von Umfelddaten bezüglich eines Umfelds des Fahrzeugs, eines geplanten zumindest teilautomatisierten Fahrmanövers. Das geplante Fahrmanöver kann dabei einen wesentlichen Einfluss auf die Querführung des Fahrzeugs (auch im Sinne einer bestimmten Veränderung der Querführung) umfassen. Das Ermitteln des geplanten Fahrmanövers kann umfassen, das Ermitteln einer Mehrzahl von unterschiedlichen möglichen Fahrmanövern, sowie das Auswählen des geplanten Fahrmanövers aus der Mehrzahl von möglichen Fahrmanövern.

Außerdem umfasst das Verfahren das Generieren eines kinästhetischen und/oder haptischen Signals in Bezug auf das geplante Fahrmanöver an einen Fahrer des Fahrzeugs. Das kinästhetische und/oder haptische Signal wird dabei zeitlich vor der (zumindest teilautomatisierten) Umsetzung des geplanten Fahrmanövers generiert, um dem Fahrer des Fahrzeugs, insbesondere in Echtzeit, zu übermitteln, dass "das Fahrzeug" bzw. eine entsprechende Fahrfunktion beabsichtigt, das (bestimmte) geplante Fahrmanöver sofort bzw. in naher Zukunft umzusetzen.

Besonders bevorzugt wird dabei zumindest der Typ des geplanten Fahrmanövers, beispielsweise ein Spurwechsel oder Abbiegen (beispielsweise in Bezug auf die aktuelle oder nächste Spurwechselmöglichkeit oder Abbiegemöglichkeit), ein Einparkmanöver, ein Rangiermanöver, ein Wendemanöver, ein Überholmanöver, ein Ausweichmanöver, etc., an den Fahrer übermittel. Besonders bevorzugt kann auch der ermittelte Typ des geplanten Fahrmanövers mittels desselben oder mittels eines separaten kinästhetischen und/oder haptischen Signals an den Fahrer des Fahrzeugs übermittelt werden.

Außerdem umfasst das Verfahren das Umsetzen des geplanten Fahrmanövers, wenn (innerhalb eines vorbestimmten Zeitfensters im Zusammenhang mit dem Generieren des kinästhetischen und/oder haptischen Signals) eine vorbestimmte zustimmende Bedienaktion durch den Fahrer erfolgt und/oder wenn eine vorbestimmte ablehnende Bedienaktion des Fahrers ausbleibt. Dabei sind die vorbestimmte zustimmende Bedienaktion und die vorbestimmte ablehnende Bedienaktion bevorzugt unterschiedlich. Die zustimmende Bedienaktion zeigt dabei an, dass der Fahrer des Fahrzeugs mit der Umsetzung des geplanten Fahrmanövers einverstanden ist. Die ablehnende Bedienaktion zeigt an, dass der Fahrer die Umsetzung des geplanten Fahrmanövers ablehnt.

Ein Ablehnen eines Manövers kann dabei auch ein (zeitliches) Verschieben eines Fahrmanövers umfassen.

Dabei kann der Fahrer einen gewünschten Einfluss in die Ausführung bestimmter Manöver der Fahrfunktion in Bezug auf das zumindest teilweise automatisierte Fahren einbringen, ohne dabei das Abschalten der Fahrfunktion herbeizuführen oder die Fahrstrategie der Fahrfunktion abzulehnen.

Das Verfahren ermöglicht ein schnelles, zuverlässiges und intuitives Zusammenwirken zwischen einer zumindest teilautomatisierten Fahrfunktion und einem Fahrer des Fahrzeugs. Insbesondere wird eine Kommunikation zwischen Fahrzeug und Fahrer in Hinsicht auf bestimmte zumindest teilweise automatisiert ausführbare Fahrmanöver wesentlich verbessert. So können die Qualität der Fahrfunktion und/oder der Komfort für den Fahrer des Fahrzeugs erhöht werden.

Bevorzugt umfasst das Fahrmanöver einen wesentlichen Anteil der Querführung des Fahrzeugs.

Das Generieren des kinästhetischen und/oder haptischen Signals kann umfassen, das Ansteuern eines Aktuators des Fahrzeugs, um eine quer- und/oder vertikaldynamische Einwirkung des Fahrzeugs, insbesondere eine kurzzeitige Wankbewegung und/oder eine Nickbewegung und/oder eine Hub- bzw. Senkbewegung der Fahrgastzelle des Fahrzeugs und/oder zumindest eines Teils, insbesondere eines Segments, des Fahrersitzes, zu bewirken. Dabei kann die quer- und/oder vertikaldynamische Einwirkung bevorzugt in die Richtung erfolgen, die (bevorzugt im Wesentlichen nur) abhängig von der Richtung des geplanten Fahrmanövers ist (und ggf. mit dieser Richtung übereinstimmt).

Besonders bevorzugt entspricht die vom Fahrer des Fahrzeugs wahrnehmbare Richtung des generierten kinästhetischen und/oder haptischen Signals im Wesentlichen der Richtung des geplanten Manövers. Insbesondere kann es sich dabei um die Richtung handeln, in die eine mit dem Manöver zusammenhängende Querführung des Fahrzeugs (bzw. Veränderung der Querführung) geplant ist.

Dabei kann das Verfahren auch ein Zuordnen der Richtung des geplanten Manövers zu der wahrnehmbaren Richtung eines haptischen und/oder kinästhetischen Signals umfassen. Dabei kann ein kinästhetisches und/oder haptisches Signal generiert werden, das zumindest in seiner wahrnehmbaren Wirkung auf den Fahrer des Fahrzeugs eine hohe bzw. größtmögliche Übereinstimmung mit der Richtung aufweist, die das Manöver kennzeichnet.

Eine vertikaldynamische Einwirkung ist z.B. zu verstehen als ein kurzzeitiges leichtes Wanken und/oder Nicken und/oder Gieren und/oder Heben bzw. Senken, das an den Fahrer mittels des Fahrersitzes, insbesondere über die Sitz- und Anlehnfläche bzw. Kontaktflächen mit dem Fahrersitz, übermittelt wird.
Die vertikaldynamische Einwirkung kann mit den Aktoren des Fahrwerks des Fahrzeugs, die zu einer vertikaldynamischen Stabilisierung bzw. Federung des Fahrzeugs dienen, und/oder mit den Aktoren, die einen entsprechenden Einfluss auf den (einzelnen) Fahrzeugsitz aufweisen, bewirkt werden.

Dabei kann (bzw. muss) das kinästhetische Signal selbst keine bzw. keine signifikante Verschiebung der Fahrgastzelle oder des gesamten Fahrzeugsitzes in die betreffende (Quer-)Richtung aufweisen. Eine solche Verschiebung wäre mit der typischerweise in Fahrzeugen vorhandenen Aktorik meist kaum realisierbar oder hinsichtlich einer möglichen Interpretation durch den Fahrer missverständlich.

Als eine Wankbewegung kann insbesondere eine sehr kurze und leichte Drehung der Fahrgastzelle des Fahrzeugs oder des Fahrersitzes des Fahrzeugs nach links in Bezug auf eine in Fahrtrichtung des Fahrzeugs, insbesondere parallel zu der X-Achse des Fahrzeugs, verlaufenden nach vorne gerichteten Achse (gegen den Urzeigersinn) verstanden werden. Eine solche Wankbewegung kann durch ein kurzzeitiges, relativ schnelles Absenken der Seite des Fahrzeugs, in der sich der Fahrersitz befindet, beispielsweise lediglich um einige wenige Zentimeter, insbesondere kombiniert mit einer leichten Anhebung der gegenüberliegenden Seite, bewirkt werden. Die Wankbewegung kann durch eine Kombination aus der Ansteuerung von einem, zwei, drei oder vier vertikaldynamischen Aktoren des Fahrzeugs erreicht werden. Die Wankbewegung kann dann wiederum nach einem bestimmten Zeitintervall durch ein langsames Anheben der gesenkten Seite des Fahrzeugs ausgeglichen werden.

Eine Wankbewegung zum Generieren eines vertikaldynamischen Signals kann dabei derart bewirkt (angesteuert) werden, dass der Fahrer nur die Links-Drehung und/oder das Absenken seines Sitzplatzes aufgrund einer höheren erreichten Beschleunigung wahrnimmt oder die Links-Drehung bzw. das Absenken zumindest als die Richtung des kinästhetischen Signals wahrnimmt. Eine ausgleichende Anhebung bzw. damit verbundene Rechts-Drehung kann aufgrund ihrer wesentlich langsameren Ausführung nicht oder nicht als signifikant wahrgenommen werden.

Die Zusammenhänge zwischen wahrnehmbaren kinästhetischen bzw. haptischen Signalen mit der Richtung des Manövers sowie die Aktion des Fahrers mittels der im Verfahren auswertbaren Bedienhandlungen können - spätestens nach einem kurzen Erlernen - vom Fahrer verstanden werden.

Somit kann das kinästhetische und/oder haptische Signal Information über das geplante Fahrmanöver umfassen, die in präziser und intuitiver Weise durch den Fahrer des Fahrzeugs schnell wahrgenommen und interpretiert werden kann.

Dabei kann auch die Art des geplanten Manövers, insbesondere im Kontext der aktuellen Fahrsituation für den Fahrer erkennbar sein. Beispielsweise kann eine als ein leichtes kurzes Wanken über den Fahrersitz wahrnehmbare Einwirkung nach links oder rechts im Fahrkontext einer Schnellstraßenfahrt als ein Spurwechsel nach links bzw. rechts interpretiert werden und nicht etwa mit einem geplanten Einparkmanöver auf der linken bzw. rechten Straßenseite verwechselt werden.

Das kinästhetische und/oder haptische Signal kann derart generiert werden, dass das Signal an einem Fahrersitz des Fahrzeugs stärker wahrgenommen werden kann, als an einem anderen Sitz des Fahrzeugs. Insbesondere kann (zumindest subjektiv) die Wahrnehmung bzw. Wahrnehmbarkeit des kinästhetischen und/oder haptischen Signals im Wesentlichen auf den Fahrersitz des Fahrzeugs beschränkt sein. Somit können Beeinträchtigungen anderer Insassen des Fahrzeugs vermieden werden, so dass der Komfort der zumindest teilautomatisierten Fahrfunktion weiter erhöht wird.

Das Generieren des kinästhetischen und/oder haptischen Signals kann umfassen, das Ansteuern eines Aktuators an einem Fahrersitz des Fahrzeugs. Der zumindest eine Aktuator des Fahrersitzes kann dabei insbesondere derart angesteuert werden, dass die Richtung des geplanten Fahrmanövers durch eine Bewegung des Fahrersitzes angezeigt wird. Alternativ oder ergänzend kann das Generieren des kinästhetischen und/oder haptischen Signals umfassen, das Erzeugen einer Verformung zumindest eines Teils des Fahrersitzes des Fahrzeugs.

Insbesondere können Aktoren bzw. Aktuatoren angesteuert werden, die eine mechanische Einwirkung auf die Fahrgastzelle des Fahrzeugs bewirken. Die mechanische Einwirkung kann dabei eine Kraft, einen Schub, eine Veränderung des mechanischen Wiederstands, eine Veränderung des Winkels, und/oder eine Beschleunigungseinwirkung umfassen. Besonders bevorzugt wird eine kurzzeitige, impulshafte Einwirkung erzeugt, wobei diese keine dauerhafte oder auf die vorliegende Fahrt bezogene Wirkung hat. Diese kann auf weniger als 0.5, 1, 3, oder 5 Sekunden begrenzt sein.

Die Verwendung von ein oder mehreren Aktuatoren des Fahrzeugs ermöglicht eine gezielte Kommunikation der zumindest teilautomatisierten Fahrfunktion mit dem Fahrer des Fahrzeugs (ohne Beeinträchtigung für andere Insassen des Fahrzeugs).

Das Verfahren kann umfassen, das Ermitteln eines alternativen zumindest teilautomatisierten Fahrmanövers. Das alternative Fahrmanöver kann dann durch die Vorrichtung des Fahrzeugs umgesetzt werden, wenn die vorbestimmte zustimmende Bedienaktion ausbleibt und/oder wenn die vorbestimmte ablehnende Bedienaktion erfolgt (d.h. wenn durch den Fahrer angezeigt wird, dass das geplante Fahrmanöver nicht umgesetzt werden soll). So kann die zumindest teilautomatisierte Fahrfunktion in robuster Weise bereitgestellt werden.

Das Verfahren kann umfassen, das Ermitteln eines Automatisierungsgrades des geplanten Fahrmanövers und/oder das Ermitteln, auf Basis der Umfelddaten, einer Fahrsituation für die das geplante Fahrmanöver ermittelt wurde. Insbesondere kann ein Maß für den Automatisierungsgrad, insbesondere in Form prinzipiell bzw. qualitativ unterschiedlicher Maße, ermittelt werden. Beim Maß für den Automatisierungsgrad können öffentlich bekannte, insbesondere nach VDA (Verein Deutscher Automobilhersteller) definierte Maße oder Kategoriewerte gelten. Beispielsweise können die Klassen bzw. Kategoriewerte für die Automatisierungsgrade sein: A1 - Unterstütztes Fahren; A2 - Teilautomatisiertes Fahren; A3 - Hochautomatisiert Fahren; A4- Automatisches Fahren; A0 - Automatisierungsgrad unbekannt oder niedrige Aussagen-Konfidenz.

Es kann dann in Abhängigkeit von dem Automatisierungsgrad und/oder in Abhängigkeit von der Fahrsituation bestimmt werden, ob es für die Umsetzung des geplanten Fahrmanövers erforderlich ist, dass die vorbestimmte zustimmende Bedienaktion erfolgt und/oder das die vorbestimmte ablehnende Bedienaktion ausbleibt. Es kann somit die erwartete Rückmeldung des Fahrers auf das kinästhetische und/oder haptische Signal an eine aktuelle Situation angepasst werden, so dass die Robustheit der teilautomatisierte Fahrfunktion weiter erhöht wird.

Alternativ oder ergänzend kann das kinästhetische und/oder haptische Signal an den ermittelten Automatisierungsgrad abgepasst werden. So kann der Fahrer des Fahrzeugs in effizienter Weise über die von dem Fahrer benötigte Unterstützung bei der Umsetzung des geplanten Fahrmanövers informiert werden, so dass der Fahrer in präziser Weise entscheiden kann, ob er die Umsetzung des geplanten Fahrmanövers wünscht oder nicht. Bei Bedarf kann die Umsetzung des geplanten Fahrmanövers unterbunden werden.

Ein erstes kinästhetisches und/oder haptisches Signal und ein zweites kinästhetisches und/oder haptisches Signal können derart sein, dass sie von dem Fahrer des Fahrzeugs unterschieden werden können. Dabei kann das erste kinästhetische und/oder haptische Signal dazu verwendet werden, dem Fahrer zu übermitteln, dass für die Umsetzung des geplanten Fahrmanövers das Durchführen der vorbestimmten zustimmenden Bedienaktion erforderlich ist. Dieses Signal kann z.B. dazu verwendet werden, relativ komplexe geplante Fahrmanöver anzukündigen (die z.B. einen relativ hohen Grad der Aufmerksamkeit des Fahrers erfordern). Alternativ oder ergänzend kann das zweite kinästhetische und/oder haptische Signal dazu verwendet werden, dem Fahrer zu übermitteln, dass für die Umsetzung des geplanten Fahrmanövers das Unterlassen der vorbestimmten ablehnenden Bedienaktion ausreichend ist. Dieses Signal kann z.B. dazu verwendet werden, relativ wenig komplexe geplante Fahrmanöver anzukündigen (die z.B. einen relativ geringen Grad der Aufmerksamkeit des Fahrers erfordern). So können die Qualität der Fahrfunktion und/oder der Komfort weiter erhöht werden.

Gemäß einem weiteren Aspekt wird eine Vorrichtung für ein Fahrzeug beschrieben. Die Vorrichtung umfasst zumindest eine Steuereinheit die eingerichtet ist, auf Basis vorausbestimmter Kriterien, ein geplantes zumindest teilautomatisiertes Fahrmanöver zu ermitteln.

Außerdem ist die Vorrichtung eingerichtet, ein kinästhetisches und/oder haptisches Signal in Bezug auf das geplante Fahrmanöver für einen Fahrer des Fahrzeugs zu generieren. Des Weiteren ist die Vorrichtung eingerichtet, das geplante Fahrmanöver umzusetzen, wenn eine vorbestimmte zustimmende Bedienaktion erfolgt und/oder wenn eine vorbestimmte ablehnende Bedienaktion ausbleibt. Ferner kann die Vorrichtung weitere Steuereinheiten und/oder zur Ausführung des Verfahrens eingerichtete Mittel umfassen. Bevorzugt kann die Vorrichtung auch umfassen: eine zur Ausführung des Verfahrens eingerichtete Sensorik, und/oder Schnittstellen zu weiteren elektronischen Einheiten, die im Fahrzeug verbaut, befestigt oder mit dem Fahrer und/oder mit dem Fahrzeug mitgeführt werden können. Auch kann die Vorrichtung Mittel zum Datenaustausch mit einer zur Ausführung des Verfahrens eingerichteten Einheit außerhalb des Fahrzeugs umfassen.

Gemäß einem weiteren Aspekt wird ein Fahrzeug (insbesondere ein Straßenkraftfahrzeug z.B. ein Personenkraftwagen, ein Lastkraftwagen oder ein Motorrad) beschrieben, das die in diesem Dokument beschriebene Vorrichtung umfasst.

Gemäß einem weiteren Aspekt wird ein Computerprogramm, insbesondere ein Computerprogrammprodukt, beschrieben. Das Computerprogramm kann ggf. direkt in den internen Speicher einer digitalen Vorrichtung (insbesondere einer elektronischen Vorrichtung eines Fahrerassistenzsystems in einem Fahrzeug mit einer Recheneinheit) geladen werden. Desweiteren kann das Computerprogramm Softwarecodeabschnitte umfassen, mit denen die Schritte des Verfahrens gemäß einem der beschriebenen Verfahrensansprüche ausgeführt werden, wenn das Computerprodukt auf der digitalen Vorrichtung läuft.

Bei dem Fahrzeug handelt es sich insbesondere um ein Kraftfahrzeug. Daraus resultieren zahlreiche hier diskutierte und weitere von einem Fachmann unschwer nachvollziehbare Vorteile. Alternativ kann das Verfahren auch auf Luftfahrzeuge oder Wasserfahrzeuge angewandt werden.

Als Manöver bzw. Fahrmanöver können Fahrzeug-Führungsaktionen, die zumindest eine Querführung des Fahrzeugs bevorzugt in Kombination mit einer Längsführung umfassen, angesehen werden. Dabei umfasst ein Manöver bevorzugt eine Querführung bzw. eine solche Kombination aus Querführung und Längsführung, die zu einem bestimmten (vordefinierten) Ergebnis führt: z.B. ein Spurwechsel oder Ausweichen auf eine Spur (entsprechend der Straßenmarkierungen), z.B. auf eine erste oder eine zweite Nachbarspur in Bezug zu der aktuellen Fahrspur, ein Einparken in eine Parklücke oder Parkplatz, insbesondere in eine bestimmte oder in die nächste freie Parklücke oder in den nächsten freien Parkplatz, ein Wenden innerhalb der Straße, ein Abbiegen in eine Abbiege-Möglichkeit, ein Ausweichen vor einem Hindernis oder Verkehrsteilnehmer, und/oder ein Einfädelvorgang, um eine bestimmte oder nächste mögliche Lücke zwischen zumindest zwei fahrenden Fahrzeugen zu bewirken.

Als Querführung des Fahrzeugs kann insbesondere ein Lenkvorgang mittels einer Vorderradlenkung und/oder Hinterradlenkung des Fahrzeugs verstanden werden. Ferner umfasst die Querführung des Fahrzeugs im Rahmen des Verfahrens alternativ oder zusätzlich ein Verteilen der Brems- und/oder Antriebskraft auf zwei oder mehrere Räder des Fahrzeugs, bei dem eine (zur bisherigen Fahrtrichtung) zumindest teilweise seitliche und/oder drehende Bewegung des Fahrzeugs resultiert.

Bevorzugt betrifft das Verfahren ein Manöver umfassend eine Querführung des Fahrzeugs. Dabei können geplante Manöver auch (nur) anhand ihrer Querführung bzw. des umfassten Querführungsanteils des Manövers an den Fahrer des Fahrzeugs mit dem generierten kinästhetischen und/oder haptischen Signal übermittelt werden. Es kann somit ggf. nur ein Querführungsanteil des geplanten Fahrmanövers durch das kinästhetische und/oder haptische Signal an den Fahrer übermittelt werden.

Bevorzugt kann das Manöver auch durch eine bestimmte Kombination aus der Querführung und Längsführung des Fahrzeugs gekennzeichnet sein. Eine solche Kombination kann z.B. ein Verhältnis, einen Zeitparameter oder Sequenzen von Phasen der Querbeschleunigung und Längsbeschleunigung umfassen. Besonders bevorzugt wird im Verfahren auch eine Information über die Kombination aus der Querführung und Längsführung des Fahrzeugs mittels zumindest eines generierten kinästhetischen und/oder haptischen Signals übermittelt.

Eine wesentliche Auswirkung auf die Querführung des Fahrzeugs kann insbesondere bedeuten, dass eine Sollgröße der Fahrzeug-Querführung verändert oder eine neue Sollgröße gewählt wird. Es kann eine Sollgröße einer Querführungsregelung des Fahrzeugs sein. Insbesondere bezieht sich die Veränderung der Sollgröße typischerweise auf eine solche Veränderung, insbesondere auf einen Wechsel der Sollgröße, die der Ausführung des bestimmten Manövers oder eines Manövers einer bestimmten Klasse bzw. Typs dient. Z.B. kann es sich bei der Auswirkung auf die Querführung des Fahrzeugs um einen Wechsel zwischen der zumindest teilweise automatisierten Spurführung innerhalb der Fahrspur auf eine Querführung des Fahrzeugs auf eine andere Spur handeln. Ferner kann auch eine Verlagerung einer Sollgröße der Querführung erfolgen, bei der eine andere Querablage (ein seitlicher Versatz) innerhalb einer Spur oder ein Abstand zu einem seitlich fahrenden Verkehrsteilnehmer im Rahmen des Manövers gewählt wird.

Eine wesentliche Auswirkung auf die Längsführung des Fahrzeugs kann insbesondere bedeuten, dass eine Sollgröße der Fahrzeug-Geschwindigkeit oder der Beschleunigung (z.B. eine Geschwindigkeitserhöhung oder ein Abbremsen bei einem Überholvorgang und/oder einem Einfädelvorgang oder eine räumliche Anordnung zu einem anderen Verkehrsteilnehmer) verändert wird. Es kann eine Sollgröße einer Längsführungsregelung des Fahrzeugs sein.

Beim geplanten Manöver kann es sich um ein Manöver handeln, welches eine bestimmte Art, ein bestimmtes Ergebnis und/oder konkrete quantitative Werte aufweist. Beispielsweise kann ein geplantes Manöver eine Verlagerung einer Bahnplanung des Fahrzeugs zu einer anderen Fahrspur sein.

Insbesondere kann das Ermitteln eines geplanten Manövers anhand mehrerer vorausbestimmten Bedingungen erfolgen. Diese können auf Basis von Umfelddaten abhängig von den Daten der Fahrzeugsensorik und/oder einer Umgebungskarte ermittelt werden, z.B. abhängig der mittels einer Auswertung der Objekte und deren Bewegung in der Fahrzeugumgebung ermittelten Daten.

Bevorzugt umfasst das Ermitteln eines geplantes Manövern auch das Ermitteln, dass
- ein Manöver einer bestimmten Art notwendig und/oder sinnvoll ist; und/oder
- ein sinnvoller passender oder ein optimierter Zeitpunkt zum Durchführen des Manöver vorliegt; und/oder
- ein Manöver zu einer Fahrroute und/oder Fahrstrategie und/oder zum gewählten Fahrstil passt; und/oder
- Fahrzeugsysteme aktuell in der Lage sind, das Manöver ohne wesentliche Nachteile auszuführen; und/oder
- das Manöver in Bezug auf die aktuelle oder für die nahe Zukunft vorausgesagte Verkehrssituation möglich und/oder notwendig und/oder komfortabel durchführbar ist.
Dies kann auf Basis von Umfelddaten abhängig von den Daten der Fahrzeugsensorik und/oder Umgebungskarte, z.B. abhängig von einer Auswertung der Objekte und deren Bewegung in der Fahrzeugumgebung, ermittelt werden.

Ein geplantes Manöver kann dabei auch ein bereits angefangenes Manöver sein, deren Ausführung mit Mitteln des Fahrzeugs bereits stattfindet. Eine solche Variante des Verfahrens kann z.B. auf Manöver zutreffen, die:
- kritische oder sehr kurzfristig geplante Manöver, z.B. Notfall- oder Ausweichmanöver, sind; und/oder
- Manöver, deren Planung während ihrer Ausführung geändert wird; und/oder
- Manöver mit zumindest zwei unterschiedlichen Phasen, wobei eine zweite oder eine weitere Phase, z.B. kritischere oder eine relevantere Phase, an den Fahrer kommuniziert werden soll,

Ein Ziel-Parameter eines Manövers kann eine quantitative und/oder qualitative Information zu dem Manöver umfassen. Eine Zielgröße eines Manövers (z.B. eines Spurwechselmanövers oder Ausweichmanövers) kann beispielsweise eine Information darüber sein, ob ein Manöver, z.B. ein Spurwechselmanöver, sich auf eine erste benachbarte Spur oder auf eine zweite (weiter entfernte, übernächste) benachbarte Spur relativ zu einer aktuellen Spur bezieht. Eine Zielgröße eines Manövers (z.B. eines Einparkmanövers) kann beispielsweise auch Information darüber umfassen, ob ein Einparkmanöver in eine nächste oder in eine übernächste Parklücke geplant ist. Eine Zielgröße eines Manövers (z.B. eines Abbiegemanövers) kann beispielsweise eine Information darüber umfassen, ob ein Abbiegen in die aktuelle oder eine der nächsten Abbiegemöglichkeiten geplant ist.

Im Folgenden werden bevorzugte Ausgestaltungen des Verfahrens beschrieben.

Das Verfahren kann umfassen, das Ermitteln der Richtung und/oder der Art bzw. des Typs eines bestimmten geplanten Manövers.

Das Verfahren kann optional umfassen, das_Ermitteln zumindest eines Zeitpunkts im Zusammenhang mit der Ausführung des Manövers. Der zumindest eine Zeitpunkt kann dabei betreffen: einen Anfangszeitpunkt, einen Zeitpunkt zu dem eine sichere Umkehr oder ein Abbruch des Manövers nicht mehr möglich ist, ein Zeitpunkt zwischen zwei unterschiedlichen Phasen eines mehrteiligen Manövers, und/oder ein Ende eines Manövers.

Das Verfahren kann umfassen, das Ermitteln von Steuerungssignalen für einen oder mehrere Aktoren des Fahrzeugs, besonders bevorzugt für einen oder mehrere vertikal- und/oder querdynamische Aktoren des Fahrzeugfahrwerks des Fahrzeugs und/oder des Fahrzeugsitzes. Besonders bevorzugt betreffen die Steuersignale dabei eine Kombination aus mehreren Aktoren und/oder eine bestimmte Sequenz oder Zeitversatz zwischen zumindest zwei Betätigungen zumindest eines Aktors.

Das Verfahren kann umfassen das Ansteuern eines oder mehrerer Aktoren des Fahrwerks und/oder des Fahrzeugsitzes derart, dass zumindest die Art und/oder die Richtung des Manövers für den Fahrer des Fahrzeugs über seinen haptischen und/oder kinästhetischen Wahrnehmungskanal, insbesondere über die Sitz- und/oder Anlehnungsfläche des Fahrers (Oberschenkel, Gesäß, Seitenteile, Rücken, Nacken, Kopf) durch den Fahrersitz wahrnehmbar ist.

Dabei kann mit zumindest einer wesentlich seitlich ausgerichteten wahrnehmbaren Komponente des haptischen und/oder kinästhetischen Signals dem Fahrer übermittelt werden, dass das geplante Manöver im Zusammenhang mit der entsprechenden Richtung relativ zum Fahrzeug steht.

Das Verfahren kann optional, alternativ oder zusätzlich umfassen: Falls das geplante Manöver auch eine wesentliche Veränderung der Längsführung des Fahrzeugs umfasst, z.B. eine Beschleunigungsphase für einen Überhol- oder Einfädelvorgang, dann kann auch eine Verstellen eines Sitzsegments, bevorzugt der Sitzlehne des Fahrzeugs, abhängig von dem Beschleunigungsvektor in einem zeitlichen Zusammenhang mit dem Beschleunigungsvorgang erfolgen. Dabei kann das Verstellen des Sitzsegments (zumindest zeitlich oder räumlich) mit einem weiteren haptischen und/oder kinästhetischen Signal kombiniert werden.

Ferner kann auch zumindest eine Zeitinformation im Zusammenhang mit dem Manöver, z.B. eine Anfangszeit des Manövers und/oder ein Übergang von einer ersten Phase eines Manövers zu einer zweiten Phase des Manövers und/oder ein Beenden des Manövers übermittelt werden. Auch können dabei der Zeitpunkt und/oder das Zeitintervall des Verstellens des Sitzsegments in einen unmittelbaren Zusammenhang mit dem Manöver, insbesondere mit dem Beschleunigungsvorgang stehen.

Das Verfahren kann umfassen, das Erfassen zumindest einer Bedienhandlung des Fahrers, die insbesondere auf das Wahrnehmen des haptischen und/oder kinästhetischen Signals folgt. Bevorzugt umfasst die Bedienhandlung zumindest eine Bediengeste, insbesondere kann die Bedienhandlung eine Gestik-Bedienung oder eine (3D-)Touchscreen-Bedienung umfassen. Besonders bevorzugt umfasst die Bediengeste eine Richtungsinformation, insbesondere zumindest einen wesentlichen Richtungsbezug bzw. eine Richtungskomponente nach rechts oder links relativ zu der Fahrtrichtung oder Ausrichtung des Fahrzeugs.

Falls das Fahrzeug sich in einem teilautomatisierten Modus befindet, und eine Bedienhandlung ermittelt wird, die einer zustimmenden Bedienhandlung zugeordnet ist und/oder wenn die Richtung der Bedienhandlung zu der Richtung des geplanten Manövers zugeordnet ist, dann kann die Ausführung des geplanten Manövers erfolgen.

Falls das Fahrzeug sich in einem teilautomatisierten Modus befindet, und eine Bedienhandlung ermittelt wird, die einer ablehnenden Bedienhandlung zugeordnet ist, dann wird das Manöver typischerweise nicht ausgeführt oder es wird eine weitere Aktion ausgeführt, falls ermittelt wird, dass aufgrund einer Nichtausführung des Manövers eine weitere Aktion des Fahrer oder des Fahrzeugs erforderlich ist.

Falls sich das Fahrzeug in einem hochautomatisierten (bis hin zum automatischen) Modus befindet, und keine Bedienhandlung oder keine Bedienhandlung von der zumindest einen bestimmten Bedienhandlung ermittelt wird, die einer ablehnenden Bedienhandlung zu einem Manöver oder einer ablehnenden Bedienhandlung für das bestimmte Manövers zugeordnet ist, dann kann das geplante Manöver umgesetzt werden.

Dabei kann das Verfahren auch eine Auswertung der Bedienhandlung umfassen, bei der entschieden wird, ob das bestimmte Manöver, ein Manöver des bestimmten Typs oder eine Durchführung jedes Manövers aktuell oder in Bezug auf einen bestimmten Zeitraum abgelehnt wird.

In einem weiteren Beispiel kann automatisch oder abhängig von der Anfrage des Fahrers oder eines Navigationssystems eine bestimmte Einparkmöglichkeit, z.B. als ein freier Parkplatz, ermittelt werden. Dabei kann es sich z.B. um eine Parklücke handeln, die sich relativ zum Fahrzeug z.B. in Richtung von 35° rechts befindet. Eine Fahrfunktion des Fahrzeugs ermittelt auf Basis der Umfelddaten bezüglich eines Umfelds des Fahrzeugs zumindest ein geplantes teilweise automatisiertes Einpark-Manöver des Fahrzeugs in diese Parklücke.

Es erfolgt eine Zuordnung der Richtung, auf die sich das Einparkmanöver bezieht (in diesem Fall die Position der Parklücke) zu einer Richtung eines kinästhetisches und/oder haptisches Signal, welches mit den im Fahrzeug vorhandenen Aktoren erzeugt werden kann. Beispielsweise kann es eine Richtung von 4, 8 oder 16 räumlichen Richtungen sein. Es wird die Richtung zugeordnet, die eine größtmögliche Übereinstimmung mit der ermittelten Richtung des Manövers hat.

Ein kinästhetisches und/oder haptisches Signal wird erzeugt, welches als in die zugeordnete Richtung ausgerichtet bzw. weisend wahrnehmbar ist. Beispielsweise wird in dem o.g. Fall ein technisch unschwer erzeugbares kinästhetisches und/oder haptisches Signal generiert, dessen wahrnehmbare Wirkung für den Fahrer des Fahrzeugs die Richtung nach vorne-rechts anzeigt.

Bevorzugt wird auch der Typ des Manövers (in diesem Beispiel das "Einparken" bzw. Längs-Einparken auf der rechten Straßenseite) ermittelt. Einhergehend wird auch der Typ des Manövers demselben oder mit einem zeitnah generierten kinästhetischen und/oder haptischen Signal an den Fahrer des Fahrzeugs übermittelt.

Auf die wahrgenommene Wirkung des gerichteten kinästhetischen und/oder haptischen Signals hin kann der Fahrer mit einem Blick in die Umgebung des Fahrzeugs das geplante Manöver unschwer nachvollziehen und die durch einen Richtungsbezug angezeigte betreffende Parklücke, auf die sich das Manöver richtet, und/oder die Absicht des Fahrzeugs in diese Parklücke zumindest teilautomatisiert einzuparken erkennen.

Ferner kann anhand der Auswertung der daraufhin erfassten Bedienhandlung des Fahrers das Einparkmanöver ausgeführt werden oder eine Suche nach einer alternativen Parklücke erfolgen.

Besonders bevorzugt kann das in diesem Dokument beschriebene kinästhetische und/oder haptische Signal mit den Fahrwerksaktoren, insbesondere mit vertikaldynamischen Aktoren des Fahrzeugs und/oder mit den Aktoren des Fahrzeugsitzes, erzeugt werden.

Kinästhetische Signale können insbesondere Signale umfassen, die größtenteils über das vestibulare System des Fahrers wahrgenommen werden. Durch den vestibularen Wahrnehmungskanal des Fahrers können dabei die durch die generierten kinästhetischen Signale bewirkten Veränderungen der Ausrichtung des menschlichen Körpers im Raum und/oder die auf den menschlichen Körper wirkenden Beschleunigungen durch den Fahrer wahrgenommen werden. Insbesondere handelt es sich bei einem kinästhetischen Signal um eine kurzzeitige Beschleunigungsfunktion, die auf den Großteil des Körpers und/oder zumindest auf den Kopf des Fahrers wirkt.

Bevorzugt können kinästhetische Signale generiert werden, die bestimmte Muster aus Einwirkungen in bestimmten Richtungen und/oder entsprechend bestimmten Zeitfunktionen, insbesondere Sequenzen auf den kinästhetischen Wahrnehmungskanal, erzeugen.

Ein generiertes kinästhetisches und/oder haptisches Signal kann im Verfahren insbesondere unmittelbar oder mittelbar über die Sitz- und/oder Anlehnungsfläche des Fahrers (Oberschenkel, Gesäß, Seitenteile, Rücken, Nacken, Kopf) durch den Fahrersitz übertragen werden.

Ein kinästhetisches Signal kann auch einen Anteil der Einwirkung als eine Drehung, insbesondere ein sogenanntes Gieren, in Relation zu dem Koordinatensystem des Fahrzeugs umfassen. Dabei kann eine leicht drehende Einwirkung (z.B. eine sehr kurzzeitige Gierbeschleunigung) um eine vertikale Achse an den Fahrer des Fahrzeugs übermittelt werden. Ein solches Gieren kann z.B. mit den Aktoren des Fahrersitzes, z.B. mittels Ansteuerung einer Kombination aus Sitzsegmenten des Sitzes, erzeugt werden. Ein gierendes kinästhetisches Signal kann z.B. einem Abbiegmanöver zugeordnet werden.

Bei den physikalischen Einwirkungen, die den kinästhetischen und/oder haptischen Signalen entsprechen, kann es sich auch um additive Einwirkung zu den sonstigen mit Fahrzeugaktoren erzeugbaren Einwirkungen handeln. Sonstige Einwirkungen können z.B. Regelbeschleunigungen sein, die zur Kompensation von Störgrößen, z.B. zu einer Wankstabilisierung des Fahrzeugs oder zum Ausgleich von Fahrbahngefälle, Fahrbahnunebenheiten, dienen. Dabei kann ein kinästhetisches und/oder haptisches Signal auch derart generiert werden, dass eine (regelungstechnische) Sollgröße eines Stabilisierungssystems kurzzeitig verändert wird.

Als haptisch können Reize verstanden werden, die größtenteils über die Haut des Fahrers oder über äußere Gewebeschichten wahrgenommen werden. Dabei ist die menschliche Fähigkeit entscheidend, einen Unterschied zwischen den physikalischen Einwirkungen auf unterschiedliche, insbesondere benachbarten, Körperpartien zu unterscheiden. Durch den haptischen Wahrnehmungskanal des Fahrers können durch die generierten haptischen Signale sowohl räumliche als auch zeitliche Veränderungen der physikalischen Einwirkung auf unterschiedliche Körperpartien unterschieden werden.

Bevorzugt können haptische Signale generiert werden, die bestimmte Druckmuster oder Druckveränderungsmuster und/oder gerichtete Wellen auf den Körper des Fahrers, insbesondere auf verschiedene Hautpartien des Fahrers, erzeugen.

Besonders bevorzugt können kinästhetische Signale mit haptischen Signalen kombiniert werden. Besonders bevorzugt können dabei Muster gebildet werden, die eine oder mehrere Einwirkungen auf den kinästhetische Wahrnehmungskanal des Fahrers in bestimmte Richtungen und/oder entsprechend bestimmte Zeitfunktionen, insbesondere Sequenzen aus Einwirkungen und einen oder mehrere Druckmuster oder Druckveränderungsmuster und/oder gerichtete Wellen auf den haptischen Wahrnehmungskanal des Fahrers erzeugen. Somit kann eine große Anzahl gut (intuitiv) unterscheidbarer kinästhetisch-haptischer Botschaften erzeugt werden, die sich auf unterschiedliche Bedeutungen, insbesondere in Bezug auf eine Fahraufgabe, insbesondere auf ein bestimmtes Manöver, beziehen.

Im Weiteren wird die Erfindung anhand von Ausführungsbeispielen näher beschrieben. Dabei zeigen
Figur 1 beispielhafte Komponenten eines Fahrzeugs;
Figur 2 ein Ablaufdiagramm eines beispielhaften Verfahrens zum zumindest teilautomatisierten Betrieb eines Fahrzeugs; und
Figur 3 beispielhafte Segmente eines Fahrzeugsitzes eines Fahrzeugs.

Wie eingangs dargelegt, befasst sich das vorliegende Dokument mit dem zumindest teilautomatisierten Betrieb eines Fahrzeugs. Insbesondere befasst sich das vorliegende Dokument damit, eine intuitive, schnelle und zuverlässige Kommunikation einer zumindest teilautomatisierten Fahrfunktion mit dem Fahrer eines Fahrzeugs zu ermöglichen.

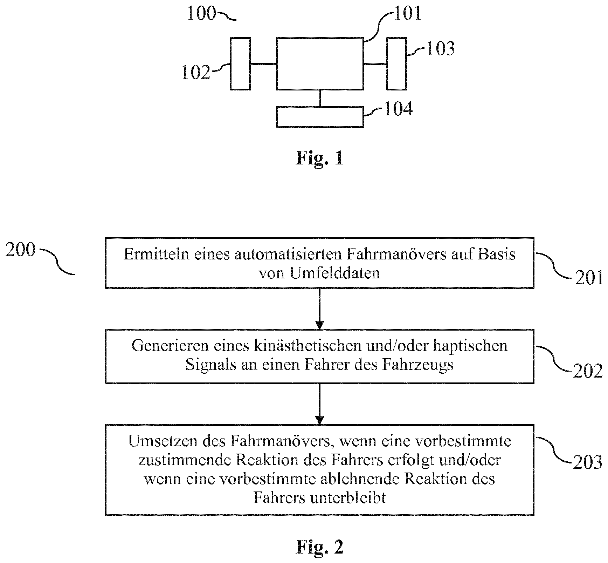

In diesem Zusammenhang zeigt Fig. 1 beispielhafte Komponenten eines Fahrzeugs 100. Das Fahrzeug 100 umfasst ein oder mehrere Umfeldsensoren 102, mit denen Umfelddaten bezüglich eines Umfelds des Fahrzeugs 100 erfasst werden können. Beispielhafte Umfeldsensoren 102 sind eine Bildkamera, ein Radarsensor, ein Ultraschallsensor, ein Lidar-Sensor, etc. Die Umfelddaten können von einer Steuereinheit 101 der Vorrichtung des Fahrzeugs 100 dazu verwendet werden, das Fahrzeug 100 zumindest teilweise autonom zu steuern. Mit anderen Worten, durch die Steuereinheit 101 der Vorrichtung können auf Basis der Umfelddaten ein oder mehrere zumindest teilautomatisierte Fahrfunktionen bereitgestellt werden. Mit noch anderen Worten, es können durch die Vorrichtung ein oder mehrere Fahrmanöver in zumindest teilautomatisierter Form durchgeführt werden. Zur Durchführung eines Fahrmanövers können ein oder mehrere Aktuatoren 103 des Antriebs, der Lenkung, der Bremsanlage und/oder des Fahrwerks des Fahrzeugs 100 angesteuert werden.

Beim zumindest teilweise automatisierten Fahren liegt eine (relativ sichere) Entscheidung zur Durchführung eines (geplanten) Fahrmanövers typischerweise relativ kurzfristig vor dem Zeitpunkt der Durchführung des (geplanten) Fahrmanövers vor. Es bleibt somit typischerweise nur relativ wenig Zeit dafür, einen Fahrer des Fahrzeugs 100 über das geplante und/oder empfohlene Fahrmanöver zu informieren. Insbesondere würde dabei ein Interpretieren und Umsetzen einer entsprechenden Handlungsempfehlung durch den Fahrer anhand einer grafischen Anzeige in vielen Fällen zu viel Zeit in Anspruch nehmen.

Durch eine denkbare Erweiterung des Zeithorizonts zur Berechnung von automatisierten Manöverentscheidungen bzw. Fahrmanövern die dem Fahrer entsprechend frühzeitig z.B. grafisch angekündigt wird, kann die Herausforderung nicht zufriedenstellend gelöst werden. Eine Erweiterung des Zeithorizonts zur Berechnung von automatisierten Manöverentscheidungen bzw. Fahrmanövern kann zu (seltenen aber ggf. wesentlichen) Abweichungen der tatsächlich eingetretenen Realität im Vergleich zur berechneten Prognose führen. Ferner führt selbst eine geringe Erhöhung des Zeithorizonts typischerweise zu einem vervielfachten Aufwand (Rechenleistung, Sensorleistung, etc.), der exponentiell mit dem erhöhten Zeithorizont anwächst.

Darüber hinaus ist die Ausgabe von Information über eine graphische Anzeige typischerweise bei Anwendung einer teilautomatisierten (TAF) oder einer hochautomatisierten (HAF) Fahrfunktion wenig komfortabel, da dies eine kontinuierliche Überwachung der graphischen Anzeige durch den Fahrer und ggf. auch eine Akkommodation der Augen auf eine Anzeigeebene erfordern würde.

Generell bestehen derzeit kaum Mittel, die es einer zumindest teilautomatisierten Fahrfunktion ermöglichen, in zuverlässiger, schneller und intuitiver Weise mit einem Fahrer des Fahrzeugs zu kommunizieren (insbesondere in Bezug auf das schnelle und unmissverständliche Übermitteln eines zu erfolgendes (geplantes) Fahrmanövers), um dem Fahrer des Fahrzeugs die Möglichkeit zu schaffen, bei Bedarf zeitnah in den Fahrbetrieb einzugreifen und/oder um dem Fahrer Vertrauen in die Handlungen der zumindest teilautomatisierten Fahrfunktion zu vermitteln.

Im Kontext der Entlastung des Fahrers von der Vielzahl seiner fahrerischen Aufgaben kann die Notwendigkeit lediglich selten eintretende Ereignisse (wie eine Entscheidung im Falle bestimmter Manöver) zu überwachen, auf welche der Fahrer wiederum sehr schnell reagiert werden soll, mit einer hohen Wahrscheinlichkeit zu Unaufmerksamkeit oder Ermüdung des Fahrers führen. Eine solche Art der Interaktion wiederspricht dem für einen Fahrer optimalen Zusammenhang zwischen Wahrnehmung und Aktion (auch als "Flow" bezeichnet). Durch das Verfahren kann die Notwendigkeit entfallen, die Anzeigeflächen zu überwachen und es kann ein schnelles, insbesondere nahezu instinktives Entscheiden des Fahrers, zumindest hinsichtlich eines Querführungsmanövers, ermöglicht werden.

Bei einem manuellen Fahrbetrieb fühlen erfahrene Fahrer eines Fahrzeugs 100 typischerweise das Verhalten des Fahrzeugs 100. Insbesondere können die Einwirkungen auf Steuereingaben (wie z.B. die Betätigung des Brems- oder Fahrpedals und/oder die Betätigung des Lenkrades) direkt durch eine vom Fahrzeug 100 bewirkte Längs- und/oder Querbeschleunigung durch den Fahrer wahrgenommen werden. Diese Form der Wahrnehmung eines Fahrers kann im Rahmen des Verfahrens dazu benutzt werden, auch eine oder mehrere Informationen über ein erst geplantes (aber nicht notwendigerweise angefangenes) Fahrmanöver an den Fahrer des Fahrzeugs zu übermitteln. Der Fahrer kann diese Information schnell, zuverlässig und intuitiv erfassen und ggf. darauf reagieren (z.B. um das geplante Fahrmanöver zu unterbinden oder ggf. abzuändern).

Die (teil-) automatisierte Fahrfunktion (z.B. TAF oder HAF) kann z.B. den Freiraum auf einer Nachbarspur der aktuell befahrenen Fahrspur einer Fahrbahn überprüfen (auf Basis der Umfelddaten) und daraufhin ein Querführungsmanöver zumindest als eine, insbesondere für das bestimmte Manöver optimierte Bahnplanung planen. Daraufhin können zu einem passenden Zeitpunkt vertikaldynamische Aktuatoren 103 des Fahrzeugs 100 angesteuert werden, so dass eine leichte Wankbewegung der Fahrgastzelle des Fahrzeugs 100 in die betreffende Richtung des geplanten Querführungsmanövers erzeugt wird. Hierzu können sehr geringe Wankbewegungen, die Verschiebungen um weniger als 1 cm oder 5 cm bewirken, ausreichend sein. Diese können auch sofort wieder reversibel gemacht werden.

Bei einer teilautomatisierten Fahrfunktion (z.B. TAF) kann die Bewegung des Fahrzeugs 100 für den Fahrer bedeuten, dass der Fahrer (z.B. mit einem leichten Lenkmoment am Lenkrad) das Manöver bestätigen muss, um die automatische Durchführung des geplanten Querführungsmanövers zu bewirken. Es wird somit durch die Vorrichtung des Fahrzeugs eine zustimmende Reaktion des Fahrers zu dem geplanten Querführungsmanöver erwartet. Bei einer hochautomatisierten Fahrfunktion (z.B. HAF) kann das Ausbleiben einer ablehnenden Bedienaktion des Fahrers (z.B. in das Lenkrad greifen oder eine Wegwisch-Geste) als die Zustimmung zu dem geplanten Querführungsmanöver bewertet werden. In den beiden Fällen erfolgt dann eine automatisierte Ausführung des Manövers. Insbesondere kann die Verlagerung der Trajektorie des Fahrzeugs 100, zur Erreichung eines bestimmten Manöverziels, z.B. auf die Nachbarspur, erfolgen, z.B. zum Ausweichen, Überholen oder Einfädeln.

Ein derartiges gerichtetes vertikaldynamisches Signal (z.B. eine Wankbewegung des Fahrzeugs) wird durch das menschliche vestibuläre System und den Muskelsinn wesentlich schneller und intuitiver wahrgenommen, als andere Einwirkungen (wie z.B. ein optisches oder akustisches Signal). Es kann somit eine wesentlich schnellere Fahrerreaktion erfolgen. Der Zeitgewinn kann z.B. dazu genutzt werden, den Zeitpunkt der Ausgabe des kinästhetischen und/oder haptischen Signals näher an den Zeitpunkt der tatsächlichen Durchführung/Umsetzung des Fahrmanövers zu bringen, so dass die Qualität der Entscheidung in Bezug auf das Fahrmanöver verbessert werden kann und/oder es kann der Aufwand zur Ermittlung einer Entscheidung in Bezug auf ein Fahrmanöver reduziert werden.

Somit können auch Überraschungen, die mit einem plötzlich angefangenen, hochautomatisierten Manöver oder mit einer vom Fahrer missverstandenen Absicht des Fahrzeugs zusammenhängen könnten, vermieden werden. Es eröffnet sich wiederum die Möglichkeit, einen notwendigen oder vom Fahrer gewünschten Einfluss auf bestimmte Manöver zu nehmen.

Ein weiterer Vorteil der Ausgabe eines kinästhetischen und/oder haptischen Signals ist, dass der Fahrer nicht "Hands-On", "Foot-On" oder "Eyes-On" fahren muss, d.h. dieser wird von einem permanenten oder häufigen Kontakt mit dem Lenkrad, mit einem der Padale des Fahrzeugs oder von einem abwechselnden Blick auf die Fahrzeugumgebung und auf Anzeigen des Fahrzeugs weiter entlastet, derart dass der Komfort für den Fahrer erhöht wird. Insbesondere ermöglicht es die Ausgabe eines kinästhetischen und/oder haptischen Signals den erforderlichen Grad der Aufmerksamkeit des Fahrers zu reduzieren, da Menschen in Bezug auf kinästhetische und/oder haptische Signale typischerweise relativ sensibel sind.

Es wird somit in diesem Dokument ein Verfahren zum zumindest teilweise automatisierten Fahren, sowie ein entsprechendes System, weitere Mittel und ein entsprechendes Computerprodukt beschrieben. Insbesondere zeigt dabei Fig. 2 ein Ablaufdiagramm eines beispielhaften Verfahrens 200 zur Durchführung bzw. zur Umsetzung eines zumindest teilautomatisierten Fahrmanövers in einem Fahrzeug 100. Das Verfahren 200 kann durch eine Steuereinheit 101 der Vorrichtung des Fahrzeugs 100 ausgeführt werden. Des Weiteren kann das zumindest teilautomatisierte Fahrmanöver zumindest teilweise in autonomer Weise durch die Steuereinheit 101 der Vorrichtung des Fahrzeugs 100 durchgeführt bzw. umgesetzt werden.

Das Verfahren 200 umfasst das Ermitteln 201, auf Basis von Umfelddaten bezüglich eines Umfelds des Fahrzeugs 100, eines geplanten zumindest teilautomatisierten Fahrmanövers. Das Fahrmanöver kann dabei insbesondere die (zumindest teilautomatisierte und ggf. vollautomatisierte) Querführung des Fahrzeugs 100 umfassen. Außerdem umfasst das Verfahren 200 das Generieren 202 eines kinästhetischen und/oder haptischen Signals in Bezug auf das geplante Fahrmanöver. Das kinästhetische und/oder haptische Signal wird dabei derart generiert, dass es für einen Fahrer des Fahrzeugs 100 wahrnehmbar ist. Außerdem umfasst das Verfahren 200 das Umsetzen 203 des geplanten Fahrmanövers (durch die Steuereinheit 101 der Vorrichtung des Fahrzeugs 100), wenn (innerhalb eines vorbestimmten Zeitintervalls nach Generieren des kinästhetischen und/oder haptischen Signals) eine vorbestimmte zustimmende Bedienaktion durch den Fahrer erfolgt und/oder wenn eine vorbestimmte ablehnende Bedienaktion des Fahrers ausbleibt.

Im Rahmen des Verfahrens 200 zum zumindest teilweise automatisierten Fahren kann somit eine Auswertung der Fahrzeugumgebung (d.h. eine Auswertung der Umfelddaten) erfolgen. Dabei kann eine zumindest vorläufige Manöverentscheidung einer Fahrzeugfunktion erfolgen, d.h. es kann ein geplantes Fahrmanöver ermittelt werden. Im Zusammenhang mit der Entscheidung ein Fahrmanöver durchführen zu wollen, kann zumindest ein kinästhetisches und/oder ein haptisches Signal an den Fahrer des Fahrzeugs 100 übermittelt werden. Die Manöverentscheidung kann dann umgesetzt werden, falls in Reaktion auf die Übermittlung des Signals eine vorausbestimme zustimmende Bedienaktion des Fahrers erfolgt oder eine vorausbestimme ablehnende Bedienaktion ausbleibt.

Dabei handelt es sich bei dem Manöver bevorzugt um ein Manöver mit einem wesentlichen Fahrzeug-Querführungs-Anteil handeln, insbesondere um einen Spurwechsel, ein Einfädeln, ein Ausweichen, ein Überholen, ein Wenden, ein Rangieren und/oder ein Parken.

Bevorzugt umfasst die Manöverentscheidung zumindest eine Bahnplanung, bzw. die Manöverentscheidung kann durch zumindest eine Bahnplanung repräsentiert werden. Eine Bahnplanung kann dabei mehrere quantitative Werte und/oder Vektorwerte umfassen, die für das Manöver kennzeichnend sind. Bei einer zumindest vorläufigen Manöverentscheidung kann die teilautomatisierte Fahrfunktion (d.h. TAF) bzw. die hochautomatisierte Fahrfunktion (d.h. HAF) z.B. einen, in einer Zielgasse befindlichen bzw. entsprechend der Manövertrajektorie notwendigen, Freiraum ermitteln und daraufhin z.B. ein Manöver aus zwei oder mehreren Manöver-Varianten auswählen.

Das Verfahren 200 kann weiter umfassen, dass zumindest ein vertikaldynamischer Aktuator 103 des Fahrzeugs 100 derart angesteuert wird, dass eine (typischerweise leichte) Wankbewegung der Fahrgastzelle erzeugt wird. Dabei weist die Richtung der Wankbewegung typischerweise in die Richtung des geplanten Manövers.

Allgemein kann im Rahmen des Verfahrens 200 ein kinästhetisches Signal erzeugt werden, das auf das geplante Fahrmanöver hinweist (insbesondere auf die Richtung des geplanten Fahrmanövers). Ein kinästhetisches Signal kann durch eine elektronische gesteuerte Beschleunigungseinwirkung gekennzeichnet sein, die durch den kinästhetischen Wahrnehmungskanal eines Fahrzeuginsassen, insbesondere mittels seines vestibulären Systems und/oder Muskelsinns, wahrnehmbar ist. Es kann sich dabei um eine additive Beschleunigungseinwirkung zu den sonstigen Regelbeschleunigungen handeln, die ein Fahrwerkregelungssystem, beispielsweise auch zum Ausgleich von Fahrbahngefälle, Fahrbahnunebenheiten oder Störgrößen, erzeugt. Dieses kann also auch als eine additive Beschleunigung zu der Sollbeschleunigung bzw. zu der sonstigen Wirkung eines Aktors 103 aufgefasst werden, die in Abhängigkeit von der zu übermittelnden Information erzeugt wird.

Das Verfahren 200 kann das Ermitteln zumindest eines Parameters zumindest eines Steuerungssignals zum Ansteuern des zumindest einen Aktors 103 des Fahrzeuges 100 umfassen. Der Parameter kann derart ermittelt werden, dass zumindest eine resultierende Beschleunigungsphase der Fahrgastzelle im Wesentlichen in die Richtung des Fahrmanövers ausgerichtet ist. Diese Richtung kann als die Signalrichtung bezeichnet werden. Alternativ oder ergänzend kann der Parameter derart ermittelt werden, dass sich zumindest eine resultierende Beschleunigungsphase der Fahrgastzelle im Wesentlichen oberhalb der kinästhetischen Wahrnehmungsschwelle des Fahrers befindet. Das zumindest eine Steuerungssignal kann derart ermittelt werden, dass der entsprechende Parameter der Beschleunigungseinwirkung, die auf die Fahrgastzelle des Fahrzeuges wirkt, zumindest zwei Phasen umfasst, wobei zumindest eine erste Phase im Wesentlichen in die Signalrichtung ausgerichtet ist und sich oberhalb der kinästhetischen Wahrnehmungsschwelle des Fahrers befindet. Zumindest ein Parameter des Signals kann durch die Signalbotschaft des Steuersignals innerhalb des Fahrzeuges übertragen werden. Die Aktoren 103 sind bevorzugt vertikaldynamische Aktoren des Fahrzeuges 100.

Es kann zumindest ein Parameter des Steuerungssignals zur Ansteuerung des zumindest einen Aktors 103 des Fahrzeuges 100 derart ermittelt werden, dass zumindest eine resultierende Beschleunigungsphase der Fahrgastzelle im Wesentlichen gegen die ermittelte Signalrichtung ausgerichtet ist und sich unterhalb der kinästhetischen Wahrnehmungsschwelle des Fahrers befindet.

Dadurch ergibt sich eine Kombination der Beschleunigungseinwirkungen auf die Fahrgastzelle in zwei Phasen, wobei lediglich die erste Beschleunigungsphase in die Signalrichtung ausgerichtet ist und vom Fahrer des Fahrzeuges zumindest deutlich stärker wahrnehmbar ist als die zweite Phase der Beschleunigungseinwirkung. Dabei nimmt der Fahrer des Fahrzeuges 100 die zumindest eine erste Phase als Signalrichtung des kinästhetischen Signals war. Die zweite Phase der Beschleunigungseinwirkung kann im Wesentlichen entgegengesetzt zur Signalrichtung des kinästhetischen Signals ausgerichtet sein. Mit dieser kann die innerhalb einer ersten Phase erfolgte Bewegung der Fahrgastzelle ausgeglichen werden. Besonders bevorzugt werden die Parameter der zumindest einen Beschleunigungsphase derart gewählt, dass die resultierende Beschleunigungseinwirkung zumindest etwa 20 % bis etwa 50 % unter der kinästhetischen Wahrnehmungsschwelle des Fahrers des Fahrzeuges liegt. Folglich kann eine relativ schnelle Stabilisierung bzw. Rückstabilisierung der Fahrgastzelle erfolgen, ohne dass der Fahrer die zweite Phase, beispielsweise als weiteres kinästhetisches Signal in eine entgegengesetzte Richtung oder als eine Störung, empfindet. Somit kann der Fahrer die Richtung gut wahrnehmen, ohne dass sein Komfortempfinden gestört wird.

Zumindest ein Parameter der sich oberhalb der kinästhetischen Wahrnehmungsschwelle des Fahrers befindenden Beschleunigungseinwirkung kann derart gewählt werden, dass die resultierende Beschleunigungseinwirkung um mehr als 10 % höher als die kinästhetische Wahrnehmungsschwelle des Fahrers und/oder niedriger als etwa 200 % bis etwa 250 % der kinästhetischen Wahrnehmungsschwelle des Fahrers ist. Der zumindest eine Parameter der Beschleunigungseinwirkung kann derart gewählt werden, dass eine sichere aber nicht störende Übermittlung einer Information zu dem geplanten Fahrmanöver an den Fahrer ermöglicht wird. Bevorzugt werden die Parameter derart gewählt, dass das resultierende kinästhetische Signal eine Beschleunigungseinwirkung erzeugt, die etwa 120 % bis etwa 150 % über der kinästhetischen Wahrnehmungsschwelle des Fahrers liegt.

Die Ermittlung des Parameters des kinästhetischen Signals kann umfassen, das Ermitteln einer auf die Fahrgastzelle wirkenden Kraft, eines auf die Fahrgastzelle wirkenden Amplitudenbetrages der Kraft, zumindest eines Beschleunigungswertes der Fahrgastzelle, eine Dauer der Beschleunigung der Fahrgastzelle, einen zeitlichen Verlauf der Beschleunigung der Fahrgastzelle oder der auf die Fahrgastzelle wirkenden Kraft und/oder einen Gradient der Beschleunigung der Fahrgastzelle.

Der Schritt des Erzeugens zumindest einer Beschleunigungseinwirkung kann das Ansteuern zumindest eines aktiven Dämpfers des Fahrzeuges 100, das Ansteuern zumindest eines Aktors 103 einer aktiven Rollstabilisierung, das Ansteuern zumindest eines Luftfederungsaktors und/oder das Ansteuern zumindest eines aktiven elektrischen Vertikaldynamikaktors umfassen.

Bevorzugt umfasst zumindest ein kinästhetisches Signal zumindest eine Winkelbeschleunigung um die Längsachse oder Querachse des Fahrzeugs 100 und/oder eine Beschleunigungseinwirkung entlang der Vertikalachse des Fahrzeugs. Diese können bevorzugt im Wesentlichen einer Winkelbeschleunigung um die X-Achse und/oder Y-Achse des Fahrzeugs 100 entsprechen. Besonders bevorzugt umfasst das kinästhetische Signal dabei eine Kombination aus zumindest zwei Beschleunigungseinwirkungen. Insbesondere kann eine solche Kombination zeitgleich oder zeitversetzt erzeugt werden. Die Beschleunigungseinwirkung im Wesentlichen entlang der Vertikalachse des Fahrzeugs (Z-Achse) kann dabei der Richtung einer Hubbewegung und/oder einer Senkbewegung entsprechen.

Die Erzeugung zumindest einer Beschleunigungseinwirkung kann mittels Ansteuerung eines oder mehrerer aktiver elektrischer Vertikaldynamikaktoren 103 des Fahrzeugs 100 durchgeführt werden, die eine ihnen zugeführte elektrische Energie in eine Vertikalbewegung des Fahrzeuges 100 an zumindest einem Rad des Fahrzeuges 100 umsetzen. Dabei können je nach ermittelter Signalrichtung, die Aktoren 103, die den rechten Rädern und den linken Rädern zugeordnet sind, und/oder die Aktoren 103, die den beiden Vorderrädern oder den beiden Hinterrädern zugeordnet sind, unterschiedlich angesteuert werden. Auch eine unterschiedliche Ansteuerung für zumindest drei Räder oder im Wesentlichen in die gleiche Richtung an allen vier Rädern ist vorteilhaft. Somit ergibt sich eine Vielfalt erzeugbarer kinästhetischer Signale, die vom Fahrer als Hinweise auf eine Vielzahl verschiedener unterscheidbaren Richtungen (bzw. unterscheidbarer Fahrmanöver) interpretiert werden kann.

Die Aktoren 103 einer aktiven Rollstabilisierung des Fahrzeugs 100 können derart gesteuert werden, dass sich zumindest eine Richtungskomponente der Beschleunigungseinwirkung insbesondere eine Wankbeschleunigung ergibt.

Alternativ oder zusätzlich können Ventile aktiver Dämpfer des Fahrzeugs 100 derart angesteuert werden, dass das Vertikaldynamikverhalten des Fahrzeuges 100 einen eindeutig wahrnehmbaren Bezug zu der ermittelten Richtung (des Fahrmanövers) zeigt. Bevorzugt erfolgt eine solche Ansteuerung kurzzeitig, insbesondere kürzer als etwa 1 sec, vorzugsweise kürzer als etwa 2 sec, mehr bevorzugt kürzer als etwa 5 sec.

Eine Kombinationen von Ventileinstellungen eines aktiven Dämpfers in die Druckrichtung und/oder Zugrichtung kann, bevorzugt zusammen mit der Ansteuerung anderer Aktoren 103 des Fahrzeuges 100 derart gewählt werden, dass sich eine Wank-, Nick- oder Hubbeschleunigung auf die Fahrgastzelle verändert und somit die ermittelte Beschleunigungseinwirkung erzeugt wird.

Alternativ oder zusätzlich kann eine Beschleunigungseinwirkung auch derart erzeugt werden, dass durch die Ansteuerung eines oder mehrerer Aktoren 103 entsprechend dem ermittelten Parameter eine kleine Bewegung der Fahrgastzelle des Fahrzeugs 100 unter Einwirkung der Gravitationskraft oder Fliehkraft (im vorgegebenen Maß) zugelassen wird. Beispielsweise können dabei die Stoßdämpfer des Fahrzeugs 100 derart angesteuert werden, dass eine Beschleunigungseinwirkung für kleiner als 0,5 bis 2 sec unter der Einwirkung der Gravitations- oder Fliehkraft im vorgegebenen Maße zugelassen wird.

Vorteilhafterweise wird eine Erzeugung der Beschleunigungseinwirkung durch eine Ansteuerung einer Kombination mehrerer Aktoren 103 des Fahrzeuges 100 durchgeführt.

Die ermittelte Beschleunigungseinwirkung kann zusätzlich auch eine Beschleunigung des Fahrzeuges 100 in die Längsrichtung und/oder Querrichtung und/oder eine Gierbeschleunigung umfassen. Ein Antriebssystem und ein Bremssystem können als ein Aktor 103 und insbesondere als ein Aktor 103 des Fahrwerkes des Fahrzeugs 100 betrachtet werden. Bevorzugt ist der Aktor 103 ein elektrischer Antrieb oder ein elektrischer Generator eines Elektrofahrzeuges oder Hybridfahrzeuges. Bei diesen Aktoren 103 kann durch eine kurzzeitige Ansteuerung des Antriebssystems des Fahrzeuges 100 eine Beschleunigungskomponente erzeugt werden, die zusammen mit einer weiteren vertikaldynamischen Bewegungskomponente, die mittels der Ansteuerung eines der vertikaldynamischen Aktoren 103 erzeugt wird, um die ermittelte Beschleunigungseinwirkung zu erzeugen. Eine Beschleunigung in Querrichtung kann bevorzugt durch eine kurzzeitige und nahezu gleichzeitige Ansteuerung eines Lenkwinkels der Vorderachse und der Hinterachse erzeugt werden. Dabei kann ein kinästhetisches Signal erzeugt werden, das als im Wesentlichen senkrecht zur Fahrtrichtung ausgerichtet wahrgenommen werden kann.

Das Verfahren 200 kann das kinästhetische Signal durch Absenken zumindest eines Teils des Fahrzeuges 100 erzeugen und Energie durch das Absenken des Fahrzeuges erzeugen, beispielsweise elektrische Energie. Besonders bevorzugt ist das Verfahren 200 so ausgestaltet, dass zumindest in einer Phase einer Beschleunigungseinwirkung das Absenken zumindest eines Teil des Fahrzeuges 100 zur Gewinnung von Energie genutzt wird. Die Energie kann elektrische Energie, hydraulische Energie oder pneumatische Energie sein. Die derart gewonnene Energie bei zumindest einer Phase der Beschleunigungseinwirkung kann einen Energieverbrauch bei zumindest einer anderen Phase der Beschleunigungseinwirkung zumindest teilweise ausgleichen.

Das Verfahren 200 kann den Beschleunigungshintergrund, der auf die Fahrgastzelle wirkt, ermitteln. Zumindest ein Parameter des kinästhetischen Signals und/oder der Zeitpunkt der Erzeugung des kinästhetischen Signals können in Abhängigkeit des Beschleunigungshintergrundes variiert werden.

Alternativ oder zusätzlich kann ein haptisches und/oder kinästhetisches Signal beispielsweise auch mittels eines Fahrersitzes oder eines Lenkrades, eines Schalthebels und/oder dergleichen übermittelt werden. Somit kann auch die Wirkung des über im Wesentlichen über die Sitzfläche übermittelten Signals verstärkt bzw. bestätigt werden.

Ferner kann zumindest ein haptisches und/oder kinästhetisches Signal in einer analogen oder sinngemäßen Weise auch an einen Fahrzeug-Sitz eines weiteren Insassen (eines Passagiers) übermittelt werden.

Die Aktuatoren 103 des Fahrzeugs 100, insbesondere die Aktuatoren 104 eines Fahrersitzes des Fahrzeugs 100, können derart angesteuert werden, dass das kinästhetische und/oder haptische Signal nur durch den Fahrer wahrgenommen wird. Zu diesem Zweck können die vertikaldynamischen Einwirkungen (Wanken und/oder Nicken) z.B. um eine nicht mittig durch das Fahrzeug 100 verlaufende Achse erzeugt werden. Ferner können zumindest zwei vertikaldynamische Einflüsse (z.B. Wanken, Nicken, Heben bzw. Senken) derart kombiniert werden, dass diese Einflüsse am Fahrersitz stärker sind, als an den anderen Sitzen des Fahrzeugs 100.

Mit einer Anpassung der Einwirkungen (d.h. der Signale) an die aktuelle kinästhetische Wahrnehmungsschwelle des Fahrers kann erreicht werden, dass die von der Fahrfunktion gesendete Information vom Fahrer richtig wahrgenommen wird und dabei weitere Fahrzeuginsassen nicht gestört werden.

Ein kinästhetisches und/oder ein haptisches Signal kann somit mit einem Aktor 104 in einem Fahrersitz des Fahrzeugs 100 erzeugt werden. Der Fahrersitz eines Fahrzeugs 100 umfasst typischerweise eine Vielzahl von Aktoren 104, beispielsweise zur Verstellung oder Verformung bestimmter Sitzteile oder zur Bereitstellung einer Massagefunktion. Insbesondere können aktive Seitenlehnen des Fahrersitzes dazu verwendet werden, Information in Bezug auf ein geplantes Fahrmanöver an den Fahrer zu übermitteln. Ferner können zahlreiche weitere Aktoren 104, die z.B. zur Umsetzung der Sitzverstellungsmöglichkeit eines Sitzes genutzt werden, abhängig von einer Manöverentscheidung bzw. abhängig von einem geplanten Fahrmanöver angesteuert werden, um Information in Bezug auf das geplante Fahrmanöver an den Fahrer zu übermitteln.

Im Rahmen des Verfahrens 200 kann zumindest ein kinästhetisches und/oder ein haptisches Signal mittels einer Verformung zumindest eines Teils des Fahrersitzes erzeugt werden. In einem Fahrzeug-Sitz kann z.B. ein Flüssigkeitsbehälter mit einer entsprechenden Pumpe 104 verbaut sein. Die Pumpe 104 kann beim zumindest teilweise automatisierten Fahren angesteuert werden, um Information in Bezug auf ein geplantes Fahrmanöver an den Fahrer zu übermitteln.

Die Richtung der Manöverentscheidung bzw. des geplanten Fahrmanövers kann dem Fahrer mittels ein oder mehrerer der Sitzaktoren 104 angezeigt werden. Insbesondere können die Rückenlehnen und/oder die Flüssigkeitsbehälter auf der rechten bzw. linken Seite des Fahrersitzes angesteuert werden, um die Richtung des Fahrmanövers zu signalisieren. Durch die Erzeugung eines kinästhetischen und/oder haptischen Signals mittels eines Aktuators 104 eines Fahrersitzes kann eine sehr direkte Signalisierung ermöglicht werden, durch die andere Insassen des Fahrzeugs 100 nicht beeinträchtigt werden.

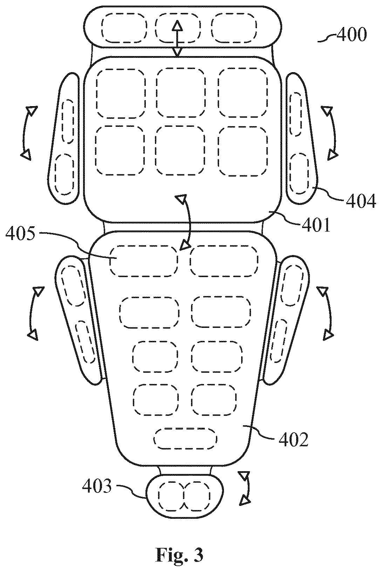

Fig. 3 zeigt eine schematische beispielhafte Abbildung eines Fahrzeugsitzes 400, insbesondere eines Fahrersitzes 400 etwa aus der Sichtposition oberhalb der Sitzfläche. Der Fahrzeugsitz 400 umfasst eine Mehrzahl von Segmenten 401, 402, 403, 404, beispielsweise eine Sitzfläche 401, eine Rückenlehne 402, eine Kopfstütze 403 und/oder eine Armlehne 404. Die Grenzen der Sitzsegmente sind in der Fig. 3 mit durchgezogenen Linien dargestellt. Des Weiteren zeigt Fig. 3 einzelne Teilsegmente 405 durch gestrichelte Linien. Die Sitzsegmente 401, 402, 403, 404 (dargestellt mit durchgezogenen Linien) sind typischer einzeln verstellbar (dargestellt durch die Doppelpfeile).

Zum Erzeugen eines kinästhetischen und/oder haptischen Signals können die (typischerweise einer Sitzverstellung dienenden) Aktoren des Fahrzeugsitzes 400 angesteuert werden. Im Gegensatz zu einer Sitzverstellung erfolgt dabei jedoch typischerweise eine kurzzeitige, insbesondere schnelle, physikalische Einwirkung auf den Fahrzeugsitz 400. Die Einstellung des Fahrzeugsitzes 400 vor und nach der physikalischen Einwirkung bleibt dabei typischerweise unverändert.

Zum Generieren eines kinästhetischen Signals zumindest teilweise mittels der Aktoren eines Fahrzeugsitzes 400, kann eine "gleichsinnige" Veränderung zwischen den Positionswinkeln und/oder der Höhe und/oder des Drucks an zumindest zwei Segmenten bzw. Teilsegmenten des Fahrzeugsitzes 400 erfolgen. Somit kann ein über den kinästhetischen Wahrnehmungskanal wahrnehmbares Signal, insbesondere umfassend eine Richtungsinformation, erzeugt werden. Unter anderem kann dadurch auch eine Wankbewegung als ein Wank-Impuls erzeugt werden.

Mit den gestrichelten Bereichen sind beispielhaft Teilsegmente 405 gekennzeichnet, mit welchen eine, insbesondere im Wesentliche lokalisierte und von anderen Teilsegmenten unabhängige, physikalische Einwirkung auf einen entsprechenden, in der Nähe der Teilsegmente 405 befindlichen, Körperteil des Insassen, z.B. Fahrers, erzeugt werden kann.

Beim Generieren eines haptischen Signals kann eine Kombination und/oder eine Sequenz von physikalischen Einwirkungen erzeugt werden, die einer bestimmten zeitlichen und/oder räumlichen (zwei- oder dreidimensionalen) Verteilung eines haptischen Reizes über unterschiedliche Teilsegmente 405 der Sitz- und Anlehnfläche des Fahrzeugsitzes 400 entsprechen. Es können dabei der Druck, der Druck-Impuls, der Druckverlauf oder auch weitere physikalische Parameter der jeweiligen Teilsegmente 405, z.B. hinsichtlich ihrer Weichheit oder Rauigkeit, verändert werden.

Auf die einzelnen Teilsegmente 405 bzw. Segmente 401, 402, 403, 404 können somit kurzzeitige physikalische Einwirkungen erzeugt werden, um ein haptisches und/oder kinästhetisches Signal an einen Insassen (z.B. den Fahrer) zu übermitteln. Dabei können die einzelnen Segmente jeweils isoliert und/oder zeitlich versetzt angesteuert werden, um z.B. eine Richtungsinformation an den Insassen zu übermitteln. Beispielhafte Verstellmöglichkeiten der Segmente und ggf. entsprechende Richtungsinformationen sind durch die Doppelpfeile angedeutet.

Die zumindest vorläufige Manöverentscheidung kann aus zwei oder mehreren optionalen Manöverentscheidungen, Bahnplanungen oder Fahrweisen des Fahrzeugs 100 ausgewählt werden. Mit anderen Worten, es können eine Mehrzahl von möglichen Fahrmanövern ermittelt werden, von denen eines als vorgeschlagenes Fahrmanöver an den Fahrer des Fahrzeugs 100 übermittelt (mit einem hinreichenden Informationsgehalt signalisiert) wird. Im Falle einer Nichtbestätigung einer zustimmenden Aktion oder im Falle einer Ablehnung durch eine ablehnende Aktion des Fahrers, kann zumindest eine alternative Manöverentscheidung mit und/oder ohne einer Bedienaktion des Fahrers durch das Fahrzeug 100 umgesetzt werden. Mit anderen Worten, das Fahrzeug 100 kann ein alternatives Fahrmanöver vorsehen, das bei Nichtauswahl des vorgeschlagenen/geplanten Fahrmanövers durch das Fahrzeug 100 ausgeführt wird.

Ein Umsetzen der Manöverentscheidung kann erfolgen, falls eine erste vorausbestimmte zustimmende Bedienaktion des Fahrers erfolgt oder eine zweite vorausbestimmte ablehnende Bedienaktion ausbleibt, wobei die erste Bedienaktion und die zweite Bedienaktion unterschiedlich sind. Beispielsweise kann die erste vorausbestimmte zustimmende Bedienaktion eine Lenkrad-Bedienung durch den Fahrer in die Richtung des vorgeschlagenen Fahrmanövers sein, z.B. ein Differenz-Lenkwinkel und/oder ein Lenkmoment, die einen vorausbestimmten Wert übersteigen. Die zweite vorausbestimmte ablehnende Bedienaktion kann z.B. eine Lenkrad-Bedienung durch den Fahrer gegen die Richtung des vorgeschlagenen Fahrmanövers sein, z.B. ein Differenz-Lenkwinkel und/oder ein Lenkmoment, die einen vorausbestimmten Wert übersteigen. Alternativ oder ergänzend kann die zweite vorausbestimmte ablehnende Bedienaktion die Betätigung eines Steuerelements zur Steuerung der Längsführung des Fahrzeugs umfassen, z.B. eines Fahr-Pedals, eines BremsPedals, eines manuellen Bedienelements zur Bedienung der Geschwindigkeitsregelung (z.B. ein "Handgas"), etc.

Abhängig von dem Automatisierungsgrad des Fahrzeugs 100 und/oder von der konkreten Situation kann entschieden werden, ob die Umsetzung des Manövers eine zustimmende Bedienaktion des Fahrers erfordert und/oder ein Ausbleiben einer ablehnenden Bedienaktion ausreichend ist. Bei dem Automatisierungsgrad handelt es sich dabei bevorzugt um einen aktuellen bzw. für die nahe Zukunft, besonders bevorzugt um den für das bestimmte Fahrmanöver ermittelten Automatisierungsgrad.

Je nach vorausermitteltem Automatisierungsgrad für das geplante Fahrmanöver kann die haptische und/oder kinästhetische Einwirkung auf den Fahrer des Fahrzeugs 100 variiert werden.

Es können unterschiedliche Klassen von haptischen und/oder kinästhetischen Einwirkungen bereitgestellt werden. Diese Klassen sind dabei derart ausgelegt, dass die Einwirkungen von zwei unterschiedlichen Klassen von dem Fahrer unterschiedlich wahrgenommen werden, so dass die unterschiedlichen Klassen von dem Fahrer unterschieden werden können. Bei einer ersten Klasse kann die Umsetzung des Manövers (ggf. ausschließlich) abhängig davon erfolgen, dass eine bestimmte zustimmende Fahreraktion erfolgt. Bei einer zweiten Klasse kann die Umsetzung des Manövers (ggf. ausschließlich) abhängig davon erfolgen, dass eine bestimmte ablehnende Fahreraktion ausbleibt. Das Fahrzeug 100 kann somit dem Fahrer durch die Klasse der haptischen und/oder kinästhetischen Einwirkung mitteilen, ob das Betätigen einer bestimmten zustimmenden Fahreraktion erforderlich ist oder über das Ausbleiben einer bestimmten ablehnenden Fahreraktion ausreicht. Das "Ausbleiben" kann sich dabei auf eine bestimmte Zeitspanne oder auf einen Manöverfortschritt beziehen. Mit anderen Worten, es kann überprüft werden, ob innerhalb eines bestimmten Zeitraums eine ablehnende Fahreraktion ausbleibt. Wenn dies der Fall ist, kann das vorgeschlagene Fahrmanöver (ggf. unwiderruflich) durch das Fahrzeug 100 ausgeführt werden.

Durch das in diesem Dokument beschriebene Verfahren 200 kann dem Fahrer eines Fahrzeugs 100 mit einer zumindest teilautomatisierten Fahrfunktion ein besonderes Fahrerlebnis ermöglicht werden. Des Weiteren ermöglicht das Verfahren 200 eine schnelle und intuitive Wahrnehmung einer Fahrsituation und eines Fahrzeugvorhabens durch den Fahrer. Durch die damit gewonnene Zeit kann der Komfort für den Fahrer erhöht werden. Alternativ oder ergänzend kann mit der gewonnenen Zeit die Qualität von Manöverentscheidungen und/oder der Aufwand (Sensorik, Rechenleistung, Energie, etc.) zur Bereitstellung einer zumindest teilautomatisierten Fahrfunktion reduziert werden. Das Verfahren 200 ermöglicht es einem Fahrer weiter, das Verhalten einer zumindest teilweise automatisierten Fahrfunktion besser nachzuvollziehen und ggf. anzupassen. Des Weiteren können dem Fahrer durch das Verfahren 200 erweiterte Freiheiten und ein reduzierter Aufmerksamkeitsgrad ermöglicht werden.

## Patentansprüche

1. Verfahren (200) zur Umsetzung eines zumindest teilautomatisierten Fahrmanövers in einem Fahrzeug (100), wobei das Verfahren (200) umfasst,
- Ermitteln (201), auf Basis von Umfelddaten bezüglich eines Umfelds des Fahrzeugs (100), eines geplanten zumindest teilautomatisiert durchführbaren Fahrmanövers;
- Generieren (202) eines kinästhetischen und/oder haptischen Signals in Bezug auf das geplante Fahrmanöver an einen Fahrer des Fahrzeugs (100), um dem Fahrer des Fahrzeugs (110) zu übermitteln, dass das Fahrzeug (100) beabsichtigt, das geplante Fahrmanöver in naher Zukunft umzusetzen; und
- Umsetzen (203) des geplanten Fahrmanövers, wenn eine vorbestimmte zustimmende Bedienaktion erfolgt und/oder wenn eine vorbestimmte ablehnende Bedienaktion ausbleibt; wobei das Generieren (202) des kinästhetischen und/oder haptischen Signals zeitlich vor dem Umsetzen (203) des geplanten Fahrmanövers erfolgt.

2. Verfahren (200) gemäß Anspruch 1, wobei
- das geplante Fahrmanöver eine wesentliche Auswirkung auf eine Querführung des Fahrzeugs (100) aufweist;
- das Generieren (202) des kinästhetischen Signals umfasst, Ansteuern eines Aktuators (103) des Fahrzeugs (100), um zumindest eine vertikaldynamische Einwirkung, insbesondere eine Wankbewegung, auf eine Fahrgastzelle des Fahrzeugs (100) und/oder auf zumindest ein Segment (401, 402, 403, 404, 405) eines Fahrersitzes (400) des Fahrzeugs (100) zu bewirken; und
- eine Richtung der vertikaldynamischen Einwirkung abhängig von einer Richtung des geplanten Fahrmanövers ist;

3. Verfahren (200) gemäß einem der vorhergehenden Ansprüche, wobei
- das geplante Fahrmanöver eine wesentliche Auswirkung auf eine Querführung des Fahrzeugs (100) aufweist;
- das Generieren (202) des haptischen Signals umfasst, Ansteuern eines Aktuators eines Fahrersitzes (400), um zumindest eine gerichtete haptische Einwirkung mittels des Fahrersitzes (400) des Fahrzeugs (100) zu bewirken; und
- eine Richtung der haptischen Einwirkung abhängig von einer Richtung des geplanten Fahrmanövers ist.

4. Verfahren (200) gemäß einem der vorhergehenden Ansprüche, wobei
- das geplante Fahrmanöver eine wesentliche Veränderung einer Längsführung des Fahrzeugs (100) aufweist;
- zumindest ein Aktuator (104) eines Fahrersitzes (400) des Fahrzeugs (100) derart betätigt wird, dass eine Verstellung zumindest eines Sitzsegments (401, 402, 403, 404, 405) des Fahrersitzes (400) erfolgt;
- die Verstellung des Sitzsegments, insbesondere die Richtung der Verstellung des Sitzsegments, zumindest von einer Richtung der Veränderung der Längsführung des Fahrzeugs (100) abhängig ist.

5. Verfahren (200) gemäß einem der vorhergehenden Ansprüche, wobei das kinästhetische und/oder haptische Signal derart generiert wird, dass das Signal an einem Fahrersitz (400) des Fahrzeugs (100) zumindest stärker wahrgenommen werden kann, als an einem anderen Sitz des Fahrzeugs (100).

6. Verfahren (200) gemäß einem der vorhergehenden Ansprüche, wobei das Generieren (202) des kinästhetischen und/oder haptischen Signals umfasst, Ansteuern eines Aktuators (104) an einem Fahrersitz (400) des Fahrzeugs (100), insbesondere derart, dass eine Richtung des geplanten Fahrmanövers durch eine Bewegung des Fahrersitzes (400) übermittelt wird.

7. Verfahren (200) gemäß einem der vorhergehenden Ansprüche, wobei das Generieren (202) des kinästhetischen und/oder haptischen Signals umfasst, Erzeugen einer Verformung zumindest eines Teils eines Fahrersitzes (400) des Fahrzeugs (100), wobei die Verformung des Fahrersitzes (400) dem geplanten Fahrmanöver, insbesondere einem Typ des geplanten Fahrmanövers, zugeordnet ist.

8. Verfahren (200) gemäß einem der vorhergehenden Ansprüche, wobei
- das Ermitteln (201) des geplanten Fahrmanövers das Ermitteln zumindest eines Typs des geplanten Fahrmanövers und/oder eines Ziel-Parameters des geplanten Fahrmanövers umfasst; und
- das Generieren eines kinästhetischen und/oder haptischen Signals derart erfolgt, dass zumindest der Typ des geplanten Fahrmanövers und/oder zumindest der Ziel-Parameter des geplanten Fahrmanövers mit dem Signal übermittelt wird.

9. Verfahren (200) gemäß einem der vorhergehenden Ansprüche, wobei das Ermitteln (201) des geplanten Fahrmanövers umfasst,
- Ermitteln einer Mehrzahl von unterschiedlichen möglichen Fahrmanövern in Abhängigkeit von den Umfelddaten; und
- Auswählen des geplanten Fahrmanövers aus der Mehrzahl von möglichen Fahrmanövern nach einem oder mehreren vorausbestimmten Kriterien.

10. Verfahren (200) gemäß einem der vorhergehenden Ansprüche, wobei das Verfahren (200) umfasst,
- Ermitteln eines alternativen zumindest teilautomatisiert durchführbaren Fahrmanövers; und
- Umsetzen des alternativen Fahrmanövers, insbesondere eines optimal passenden alternativen Fahrmanövers, wenn eine vorbestimmte zustimmende Bedienaktion ausbleibt und/oder wenn eine vorbestimmte ablehnende Bedienaktion erfolgt.

11. Verfahren (200) gemäß einem der vorhergehenden Ansprüche, wobei die vorbestimmte zustimmende Bedienaktion und die vorbestimmte ablehnende Bedienaktion unterschiedlich sind.

12. Verfahren (200) gemäß einem der vorhergehenden Ansprüche, wobei
- das Verfahren umfasst, Ermitteln eines Automatisierungsgrades des geplanten Fahrmanövers und/oder Ermitteln, auf Basis der Umfelddaten, einer Fahrsituation für die das geplante Fahrmanöver ermittelt wurde;
- Bestimmen, in Abhängigkeit von dem Automatisierungsgrad und/oder in Abhängigkeit von der Fahrsituation, ob es für die Umsetzung des geplanten Fahrmanövers erforderlich ist,
- dass die vorbestimmte zustimmende Bedienaktion erfolgt; und/oder
- dass die vorbestimmte ablehnende Bedienaktion ausbleibt.

13. Verfahren (200) gemäß einem der vorhergehenden Ansprüche, wobei
- das Verfahren umfasst, Ermitteln eines Automatisierungsgrades des geplanten Fahrmanövers; und
- das kinästhetische und/oder haptische Signal von dem Automatisierungsgrad abhängt.

14. Verfahren (200) gemäß einem der vorhergehenden Ansprüche, wobei
- ein erstes kinästhetisches und/oder haptisches Signal und ein zweites kinästhetisches und/oder haptisches Signal derart sind, dass sie von dem Fahrer des Fahrzeugs (100) unterschieden werden können; und
- das erste kinästhetische und/oder haptische Signal dem Fahrer übermittelt, dass für die Umsetzung des geplanten Fahrmanövers das Durchführen einer vorbestimmten zustimmenden Bedienaktion erforderlich ist; und/oder
- das zweite kinästhetische und/oder haptische Signal dem Fahrer übermittelt, dass für die Umsetzung des geplanten Fahrmanövers das Unterlassen einer vorbestimmten ablehnenden Bedienaktion ausreichend ist.

15. Computerprogramm, das eingerichtet ist, um auf einem Prozessor der Steuereinrichtung nach Anspruch 16 ausgeführt zu werden, und um dadurch das Verfahren (200) gemäß einem der vorhergehenden Ansprüche auszuführen.

16. Vorrichtung umfassend eine Steuereinheit (101) für ein Fahrzeug (100), wobei die Steuereinheit (101) der Vorrichtung eingerichtet ist,
- auf Basis von Umfelddaten bezüglich eines Umfelds des Fahrzeugs (100), ein geplantes zumindest teilautomatisiert durchführbares Fahrmanöver zu ermitteln;
- ein kinästhetisches und/oder haptisches Signal in Bezug auf das geplante Fahrmanöver für einen Fahrer des Fahrzeugs (100) zu generieren, um dem Fahrer des Fahrzeugs (110) zu übermitteln, dass das Fahrzeug (100) beabsichtigt, das geplante Fahrmanöver in naher Zukunft umzusetzen; und
- das geplante Fahrmanöver umzusetzen, wenn eine vorbestimmte zustimmende Bedienaktion erfolgt und/oder wenn eine vorbestimmte ablehnende Bedienaktion ausbleibt; wobei das kinästhetische und/oder haptische Signal zeitlich vor dem Umsetzen des geplanten Fahrmanövers generiert wird.

## Claims

1. A method (200) for implementing an at least partially automated driving manoeuvre in a vehicle (100), the method (200) comprising the steps of:
- determining (201), on the basis of data relating to an area surrounding the vehicle (100), a planned driving manoeuvre that is executable in at least partially automated fashion;
- generating (202) a kinaesthetic and/or haptic signal in relation to the planned driving manoeuvre to a driver of the vehicle (100), in order to inform the driver of the vehicle (110) that the vehicle (100) intends to implement the planned driving manoeuvre in the near future; and
- implementing (203) the planned driving manoeuvre if a predetermined accepting operating action is performed and/or if a predetermined rejecting operating action is not performed; the kinaesthetic and/or haptic signal being generated (202) chronologically before the planned driving manoeuvre is implemented (203).

2. A method (200) according to claim 1, wherein
- the planned driving manoeuvre comprises a significant effect on a lateral control of the vehicle (100);
- the step of generating (202) the kinaesthetic signal comprises a step of actuating an actuator (103) of the vehicle (100) in order to cause at least one vertical dynamic effect, especially a rolling movement, on a passenger compartment of the vehicle (100) and/or on at least one segment (401, 402, 403, 404, 405) of a driving seat (400) of the vehicle (100); and
- a direction of the vertical dynamic effect is dependent upon a direction of the planned driving manoeuvre.

3. A method (200) according to one of the preceding claims, wherein
- the planned driving manoeuvre comprises a significant effect on a lateral control of the vehicle (100);
- the step of generating (202) the haptic signal comprises actuating an actuator of a driving seat (400) in order to cause at least one targeted haptic effect by means of the driving seat (400) of the vehicle (100); and
- a direction of the haptic effect is dependent upon a direction of the planned driving manoeuvre.

4. A method (200) according to one of the preceding claims, wherein
- the planned driving manoeuvre comprises a significant change in longitudinal control of the vehicle (100);
- at least one actuator (104) of a driving seat (400) of the vehicle (100) is actuated such that an adjustment of at least one seat segment (401, 402, 403, 404, 405) of the driving seat (400) is performed;
- the adjustment of the seat segment, especially the direction of the adjustment of the seat segment, is dependent at least on a direction of the change in longitudinal control of the vehicle (100).

5. A method (200) according to one of the preceding claims, wherein the kinaesthetic and/or haptic signal is generated such that the signal is perceptible at least more intensely at a driving seat (400) of the vehicle (100) than at another seat of the vehicle (100).

6. A method (200) according to one of the preceding claims, wherein the step of generating (202) the kinaesthetic and/or haptic signal comprises actuating an actuator (104) at a driving seat (400) of the vehicle (100), especially such that a direction of the planned driving manoeuvre is transmitted by means of a movement of the driving seat (400).

7. A method (200) according to one of the preceding claims, wherein the step of generating (202) the kinaesthetic and/or haptic signal comprises generating a deformation of at least a part of a driving seat (400) of the vehicle (100), the deformation of the driving seat (400) being allocated to the planned driving manoeuvre, especially a type of the planned driving manoeuvre.

8. A method (200) according to one of the preceding claims, wherein
- the step of determining (201) the planned driving manoeuvre comprises determining at least a type of the planned driving manoeuvre and/or a target parameter of the planned driving manoeuvre; and
- the step of generating a kinaesthetic and/or haptic signal is performed such that at least the type of the planned driving manoeuvre and/or at least the target parameter of the planned driving manoeuvre is transmitted using the signal.

9. A method (200) according to one of the preceding claims, wherein the step of determining (201) the planned driving manoeuvre comprises:
- determining a plurality of different possible driving manoeuvres depending on the data relating to the surrounding area; and
- selecting the planned driving manoeuvre from the plurality of possible driving manoeuvres according to one or more predetermined criteria.

10. A method (200) according to one of the preceding claims, wherein the method (200) comprises the steps of:
- determining an alternative driving manoeuvre executable in at least partially automated fashion; and
- implementing the alternative driving manoeuvre, especially an optimally suitable alternative driving manoeuvre, if a predetermined accepting operating action is not performed and/or if a predetermined rejecting operating action is performed.

11. A method (200) according to one of the preceding claims, wherein the predetermined accepting operating action and the predetermined rejecting operating action are different.

12. A method (200) according to one of the preceding claims, wherein
- the method comprises a step of determining a degree of automation of the planned driving manoeuvre and/or determining, on the basis of the data relating to the surrounding area, a driving situation for which the planned driving manoeuvre was determined;
- determining, depending on the degree of automation and/or depending on the driving situation, whether it is necessary for:
- the predetermined accepting operating action to be performed; and/or
- the predetermined rejecting operating action not to be performed,
in order for the planned driving manoeuvre to be implemented.

13. A method (200) according to one of the preceding claims, wherein
- the method comprises a step of determining a degree of automation of the planned driving manoeuvre; and
- the kinaesthetic and/or haptic signal is dependent on the degree of automation.

14. A method (200) according to one of the preceding claims, wherein
- a first kinaesthetic and/or haptic signal and a second kinaesthetic and/or haptic signal are such that the driver of the vehicle (100) is able to differentiate between the two; and
- the first kinaesthetic and/or haptic signal informs the driver that it is necessary to execute a predetermined accepting operating action in order for the planned driving manoeuvre to be implemented; and/or
- the second kinaesthetic and/or haptic signal informs the driver that it is sufficient that a predetermined rejecting operating action is not executed in order for the planned driving manoeuvre to be implemented.

15. A computer program which is designed to be executed on a processor of the control device according to claim 16 and to thus carry out the method (200) according to one of the preceding claims.

16. A device comprising a control unit (101) for a vehicle (100), wherein the control unit (101) of the device is configured to
- determine, on the basis of data relating to the area surrounding the vehicle (100), a planned driving manoeuvre that is executable in at least partially automated fashion;
- generate a kinaesthetic and/or haptic signal in relation to the planned driving manoeuvre for a driver of the vehicle (100), in order to inform the driver of the vehicle (110) that the vehicle (100) intends to implement the planned driving manoeuvre in the near future; and
- implement the planned driving manoeuvre if a predetermined accepting operating action is performed and/or if a predetermined rejecting operating action is not performed; the kinaesthetic and/or haptic signal being generated chronologically before the planned driving manoeuvre is implemented.

## Revendications

1. Procédé (200) pour la mise en œuvre d'une manœuvre de conduite au moins partiellement automatisée dans un véhicule (100), ce procédé (200) comprenant des étapes consistant à :
- évaluer (201) sur le fondement de données d'environnement concernant l'environnement du véhicule (100) une manœuvre de conduite prévue pouvant être effectuée de façon au moins partiellement automatisée,
- générer (202) un signal kinesthésique et/ou haptique concernant la manœuvre de conduite prévue pour le conducteur du véhicule (100) de façon à indiquer au conducteur du véhicule (110) que le véhicule (100) envisage de mettre en œuvre la manœuvre de conduite prévue dans un futur proche, et
- mettre en œuvre (203) la manœuvre de conduite prévue lorsqu'une action de fonctionnement favorable prédéterminée est effectuée et/ou lorsqu'une action de fonctionnement défavorable prédéterminée ne se présente pas, la génération (202) du signal kinesthésique et/ou haptique étant effectuée chronologiquement avant la mise en œuvre (203) de la manœuvre de conduite prévue.

2. Procédé (200) conforme à la revendication 1,
selon lequel :
- la manœuvre de conduite prévue a un effet important sur le guidage transversal du véhicule (100),
- la génération (202) du signal kinesthésique comprend une commande d'un actionneur (103) du véhicule (100) pour provoquer au moins une action sur la dynamique verticale, en particulier, un mouvement de roulement sur l'habitacle du véhicule (100) et/ou sur au moins un segment (401, 402, 403, 404, 405) du siège (400) du conducteur du véhicule (100), et
- la direction de l'action sur la dynamique verticale dépend de la direction de la manœuvre de conduite prévue.

3. Procédé (200) conforme à l'une des revendications précédentes,
selon lequel :
- la manœuvre de conduite prévue a un effet important sur le guidage transversal du véhicule (100),
- la génération (202) du signal kinesthésique comprend une commande d'un actionneur du siège du conducteur (400) pour provoquer au moins une action haptique orientée au moyen du siège (400) du véhicule (100), et
- l'orientation de l'action haptique dépend de la direction de la manœuvre de conduite prévue.

4. Procédé (200) conforme à l'une des revendications précédentes,
selon lequel :
- la manœuvre de conduite prévue est une modification importante du guidage longitudinal du véhicule (100),
- au moins un actionneur (104) du siège (400) du conducteur du véhicule (100) est actionné de façon à provoquer un déplacement d'au moins un segment (401, 402, 403, 404, 405) du siège (400) du conducteur,
- le déplacement du segment de siège en particulier la direction du déplacement du segment de siège dépend d'au moins de la direction de la modification du guidage longitudinal du véhicule (100).

5. Procédé (200) conforme à l'une des revendications précédentes,
selon lequel le signal kinesthésique et/ou haptique est généré de sorte que le signal puisse être perçu au moins plus fort sur le siège (400) du conducteur du véhicule (100) que sur un autre siège du véhicule (100).

6. Procédé (200) conforme à l'une des revendications précédentes,
selon lequel la génération (202) du signal kinesthésique et/ou haptique comporte une commande d'un actionneur (104) sur le siège (400) du conducteur du véhicule (100), en particulier, de sorte que l'orientation de la manœuvre de conduite prévue soit communiquée par un mouvement du siège du conducteur (400).

7. Procédé (200) conforme à l'une des revendications précédentes,
selon lequel la génération (202) du signal kinesthésique et/ou haptique comprend l'obtention d'une déformation d'au moins une partie du siège (400) du conducteur du véhicule (100), la déformation du siège du conducteur (400) étant associée à la manœuvre de conduite prévue, en particulier au type de manœuvre de conduite prévue.

8. Procédé (200) conforme à l'une des revendications précédentes,
selon lequel :
- l'évaluation (201) de la manœuvre de conduite prévue comprend l'évaluation d'au moins un type de manœuvre de conduite prévue et/ou d'un paramètre d'objectif de la manœuvre de conduite prévue, et
- la génération d'un signal kinesthésique et/ou haptique est effectuée de sorte qu'au moins le type de la manœuvre de conduite prévue et/ou au moins le paramètre d'objectif de la manœuvre de conduite prévue soit(ent) communique(s) avec le signal.

9. Procédé (200) conforme à l'une des revendications précédentes,
selon lequel l'évaluation (201) de la manœuvre de conduite prévue comprend :
- l'évaluation d'une série de manœuvres de conduite possibles différentes en fonction des données d'environnement, et
- la sélection de la manœuvre de conduite prévue parmi la série de manœuvres de conduite possibles conformément à un ou plusieurs critère(s) prédéfini(s).

10. Procédé (200) conforme à l'une des revendications précédentes, comprenant des étapes consistant à :
- évaluer une manœuvre de conduite alternative pouvant être mise en œuvre de façon au moins partiellement automatisée, et
- mettre en œuvre la manœuvre de conduite alternative, en particulier une manœuvre de conduite alternative adaptée de façon optimum lorsqu'une action de fonctionnement favorable prédéfinie n'a pas lieu et/ou lorsqu'une action de conduite défavorable prédéterminée est effectuée.

11. Procédé (200) conforme à l'une des revendications précédentes,
selon lequel l'action de fonctionnement favorable prédéfinie et l'action de fonctionnement défavorable prédéfinie sont différentes.

12. Procédé (200) conforme à l'une des revendications précédentes, comprenant des étapes consistant à :
- évaluer le niveau d'automatisation de la manœuvre de conduite prévue et/ou évaluer sur la base des données d'environnement une situation de conduite pour laquelle la manœuvre de conduite prévue a été évaluée,
- déterminer en fonction du degré d'automatisation et/ou en fonction de la situation de conduite si il est nécessaire pour la mise en œuvre de la manœuvre de conduite prévue :
- que l'action de fonctionnement favorable prédéfinie soit effectuée, et/ou
- que l'action de fonctionnement défavorable prédéfinie ne se présente pas.

13. Procédé (200) conforme à l'une des revendications précédentes, comprenant une étape consistant à :
- évaluer le degré d'automatisation de la manœuvre de conduite prévue,
- le signal kinesthésique et/ou haptique dépendant du degré d'automatisation.

14. Procédé (200) conforme à l'une des revendications précédentes,
selon lequel :
- un premier signal kinesthésique et/ou haptique et un second signal kinesthésique et/ou haptique sont tels qu'ils puissent être distingués par le conducteur du véhicule (100), et
- le premier signal kinesthésique et/ou haptique indique au conducteur que pour la mise en œuvre de la manœuvre de conduite prévue, il est nécessaire d'effectuer une action de fonctionnement favorable prédéfinie, et/ou
- le second signal kinesthésique et/ou haptique indique au conducteur que pour la mise en œuvre de la manœuvre de conduite prévue, il est suffisant de ne pas faire une action de fonctionnement défavorable prédéfinie.

15. Programme d'ordinateur réalisé pour pouvoir être exécuté sur un processeur d'un dispositif de commande conforme à la revendication 16, et mettre ainsi en œuvre le procédé (200) conforme à l'une des revendications précédentes.

16. Dispositif comportant une unité de commande (101) pour un véhicule (100), cette unité de commande (101) étant réalisée pour :
- permettre d'évaluer sur le fondement de données d'environnement concernant l'environnement du véhicule (100) une manœuvre de conduite prévue pouvant être mise en œuvre de façon au moins partiellement automatisée,
- générer un signal kinesthésique et/ou haptique concernant la manœuvre de conduite prévue pour le conducteur du véhicule (100) de façon à indiquer à un conducteur (110) que le véhicule (100) envisage de mettre en œuvre la manœuvre de conduite prévue dans un futur proche, et
- mettre en œuvre la manœuvre de conduite prévue lorsqu'une action de fonctionnement favorable prédéfinie est effectuée et/ou lorsqu'une action de fonctionnement défavorable prédéfinie ne se présente pas, le signal kinesthésique et/ou haptique étant généré chronologiquement avant la conversion de la manœuvre de conduite prévue.
